(19)

**Europäisches Patentamt**
**European Patent Office**
**Office européen des brevets**

(11) **EP 4 621 647 A2**

(12) **EUROPEAN PATENT APPLICATION**

(43) Date of publication:
24.09.2025 Bulletin 2025/39

(51) International Patent Classification (IPC):
**G06N 3/045** (2023.01)　　　**G06N 3/09** (2023.01)

(21) Application number: 25161911.0

(22) Date of filing: 05.03.2025

(52) Cooperative Patent Classification (CPC):
**G06N 3/045; G06N 3/09**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 18.03.2024 US 202463566895 P
31.05.2024 US 202418680221

(71) Applicant: **Microsoft Technology Licensing, LLC**
**Redmond, WA 98052-6399 (US)**

(72) Inventors:
• **MA, Chao**
**Redmond, 98052-6399 (US)**
• **ZHANG, Cheng**
**Redmond, 98052-6399 (US)**
• **SCETBON, Meyer**
**Redmond, 98052-6399 (US)**
• **HILMKIL, Agrin Aram**
**Redmond, 98052-6399 (US)**
• **JENNINGS, Joel**
**Redmond, 98052-6399 (US)**

(74) Representative: **Page White Farrer**
**Bedford House**
**21a John Street**
**London WC1N 2BF (GB)**

(54) **DETERMINING AND PERFORMING OPTIMAL ACTIONS ON SYSTEMS**

(57) Example embodiments described herein provide a two-stage approach for training, on a dataset of samples received as input, a structural causal model (SCM). In a first stage of the example two-stage approach, a trained causal ordering predictor is used to infer a causal order of variables from the dataset. In a second stage, the SCM is trained on the same dataset using the predicted causal ordering from the first stage. Once trained, the SCM may be used to predict a causal effect of an action on a target system.

100

FIG. 1

EP 4 621 647 A2

**Description**

TECHNICAL FIELD

The present disclosure relates generally to determining and performing optimal actions on systems via causal analysis.

BACKGROUND

Structural Causal Models (SCMs) are powerful tools for understanding complex systems by revealing the causal and functional relationships between variables. Such models provide a universal analysis framework for physical and logical systems including real-world dynamical systems. These models are particularly useful in fields where decision-making relies on accurate prediction of the effects of intervention actions, such as in healthcare, genetics, manufacturing, and engineering.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

Example embodiments described herein provide a two-stage approach for training, on a dataset of samples received as input, a structural causal model (SCM). In a first stage of the example two-stage approach, a trained causal ordering predictor is used to infer a causal order for the dataset. In a second stage, the SCM is trained on the same dataset using the predicted causal ordering from the first stage. Once trained, the SCM may be used to predict a causal effect of an action on a target system.

BRIEF DESCRIPTION OF FIGURES

Particular embodiments will now be described, by way of example only, with reference to the following schematic figures, in which:

Figure 1 shows a directed acyclic graph.

Figure 2 shows a block diagram illustrating a method for training a model to predict the topological order of variables in a dataset.

Figure 3 shows a block diagram illustrating a method for training a model to predict the topological order of variables in a dataset.

Figure 4 shows a block diagram illustrating a method for training a transformer-based auto-encoder.

Figure 5 shows a block diagram illustrating a method for generating a dataset using a trained causal generative model.

Figure 6 shows a graph comparing performance results from three models.

Figure 7 shows a plot of topological ordering scores obtained from using datasets of various sizes.

Figure 8 shows a comparison of F1 scores obtained by learning with either a full graph or a topological order on various settings.

Figure 9 schematically shows a non-limiting example of a computing system.

DETAILED DESCRIPTION

Example embodiments described herein provide a two-stage approach for training, on a dataset of samples received as input, a structural causal model (SCM). The SCM encodes a causal relationship (or relationships) identified in the dataset. Once trained, the SCM may be used in a generative process to generate new samples exhibiting the identified causal relationship(s). The generative process may be characterized as a form of simulation. Applications of the generative process include, for example, simulating an effect of an action (also referred to as an 'intervention') on a physical or logical system in terms of a chosen measure (or measures). For example, the action might be configuring a machine (such as a manufacturing machine, computer device, vehicle, aircraft, consumer device etc.) with a certain parameter, setting or configuration, whose effect on a chosen measure (such as production efficiency, energy consumption, computer resource or memory efficiency, operational lifespan, fuel consumption, frequency of maintenance etc.) is estimated. By evaluating different such actions and their predicted effect, an optimal action can be selected and performed on the target system.

Learning SCMs from observations using conventional techniques is computationally expensive due to the combinatorial nature of possible causal structures and the difficulty of inferring causal mechanisms explaining relationships between variables. Conventional approaches to learning causal models therefore require significant computational resources to achieve a useful level of performance. By contrast, embodiments of the two-stage approach described herein address a simpler a one-dimensional problem in a first stage, namely determining a causal ordering of variables, followed by training in a second stage on an ordered dataset. In so doing, a structural model may be computed for a dataset in computer system using significantly fewer computational that a conventional causal modelling approach. A desired level of trained SCM performance is achieved with significantly increased computational efficiency in a two-stage training process in computing, using a trained causal ordering predictor, a predicted causal ordering of first and second variables (first stage, which realizes the aforementioned simplification to a one-dimensional problem), and training using the predicted causal ordering a generative SCM (second stage, which leverages the efficiency gain of the first stage).

Expanding on the above, in the described examples, a first stage of the example two-stage approach, a first machine learning (ML) model is used to infer a causal order of variables from a dataset of observations associated with the variables. An observation refers to a value-variable pair. Multiple observations pertaining to the same variable are obtained in some cases. In some cases, observations are obtained by directly measuring a value of a variable. In other cases, observations pertaining to a variable are generated by a processing component from measurements of one or more other related variables. Observations are obtained, in some embodiments, using physical or virtual sensor(s). Examples of physical sensors include optical/electromagnetic sensors, temperature sensors, pressure sensors, motion sensors and the like. Virtual sensors include software or network monitoring components configured to monitory application/process behaviour, network traffic etc. A sample or observation can be characterized as a realization of a random variable, expressed as a value of the variable. So, a dataset can be seen as a set of observations, or an empirical measure of the underlying distribution (or random variable). The dataset comprises a first observation(s) associates with a first variable and a second observation(s) associated with a second variable. In some embodiments, more than two variables are considered. In some example embodiments, the first ML model has been previously trained on a cross-domain (non-domain-specific) training set. Once trained, the first ML model can be used in a 'zero-shot' manner to infer a predicted causal ordering of variables in a dataset not used in training of the model and which, in some cases, belongs a domain that was not encountered during training. In a second stage, a structural causal model (SCM), in the form of a second ML model, is trained on the same dataset using the predicted causal ordering from the first stage. For example, a reordered dataset may be generated based on the dataset and the predicted causal ordering (the reordered dataset reflecting the predicted causal ordering), and the SCM may be trained based on the reordered dataset. In some examples, the predicted causal ordering is generated in the form of a matrix $P$, the dataset is received as input in the form of a matrix $\boldsymbol{X}$, and the reordered dataset is computed as $P\boldsymbol{X}$. In some examples, a "fixed-point" SCM is trained in the second stage. This terminology refers to a novel generative ML architecture for encoding a learned structural causal model in a manner that allows new samples to be drawn from a distribution of the dataset. A fixed-point SCM may be used as an alternative to conventional representations of structural causal models (such as causal graphs). In some examples, a fixed-point SCM with a causal attention-based auto-encoder architecture is used.

In some examples, the first ML model of the first stage is trained on a cross-domain training set and, once trained, applied to a domain-specific dataset specific to a domain not encountered in training, whereas the SCM is trained on the domain-specific dataset (using its predicted causal ordering from the first stage), resulting in a trained domain-specific SCM.

Example computational methods and systems for causal modelling and analysis are described. Practical applications of the same are considered in a diversity of technical fields including engineering, manufacturing, medicine and the like. Methods and systems are described for learning structural causal models (SCMs) that can generate counterfactual data and determine optimal interventions for targeting specific effects in complex systems across various domains.

The present causal method can be used in any situation when an action is performed on any form of causal system (the 'target' system) to purposively achieve a measurable technical effect in the causal system. The only requirement in this respect is that the technical effect is quantifiable and can be measured in respect of a performed action with sufficient accuracy and precision to achieve the required technical effect. Such measurements may be performed using any technical means/components/devices, such as sensors (e.g. one or more image sensors, audio/-

pressure sensors, temperature sensors, network sensors and/or electrical sensors and the like) software monitoring (e.g. resource monitoring components running as part of an operating system, or in firmware, network traffic monitoring software etc) on any form of technical system (physical or logical) exhibiting causal properties. By learning causal relationships within a causal system, the predicted technical effect of an actions, enabling the action to be selected and performed with the aim of controlling that technical effect based on technical considerations concerning the causal properties of the target system in which the technical effect is sought to be achieved.

As discussed, example embodiments herein provide a two-stage approach for generating, from a dataset of samples received as input, a structural causal model (SCM). The SCM encodes a causal relationship (or relationships) identified in the dataset. Once generated, the SCM may be used in a generative process to generate new samples exhibiting the identified causal relationship(s). The generative process may be characterized as a form of simulation. Applications of the generative process include, for example, simulating an effect of an action (also referred to as an 'intervention') on a physical or logical system in terms of a chosen measure (or measures). For example, the action might be configuring a machine (such as a manufacturing machine, computer device, vehicle, aircraft, consumer device etc.) with a certain parameter, setting or configuration, whose effect on a chosen measure (such as production efficiency, energy consumption, computer resource or memory efficiency, operational lifespan etc.) is estimated. By evaluating different such actions and their predicted effect, an optimal action can be selected and performed on the system. In such contexts, a sample in the dataset may for example comprise an action and a measured outcome associated with the action. Multiple such samples may be collected in the dataset. These samples record actions and their associated effects, but the causal effects of the actions on the outcomes may not be known (certain action-outcome relationships observable in the dataset might be truly causal but other observation relationship may reflect mere correlation). In other implementations, the dataset might only contain observed outcomes, and the trained SCM can be used to generate a predicted causal effect for any (e.g., arbitrarily chosen) action with respect to the causal system. In this case, if a user prescribes an action, then the trained SCM model will generate its effect as the predicted outcome. The trained SCM, in this case, is used to determine and compare the causal effects of the different (arbitrarily) chosen actions, and in selecting an optimal one of these actions. By generating an SCM for the dataset, encoding truly causal relationships, new action-outcome samples may be generated, taking into account the identified casual effect(s). Note, the term 'identified' in this context does not necessarily imply that causal relationship(s) are identified in a readily human interpretable or explainable sense. In some embodiments, the SCM has the form of a neural network which is said to identify causal relationship(s) in dataset that become implicitly encoded in its parameters during training on the dataset. The dataset is not a null set. In some examples, the dataset includes a plurality of samples.

As further examples, in the manufacturing industry, causal inference can help quantitatively identify the impact of different factors that affect product quality, production efficiency, and machinery performance in manufacturing processes. By understanding causal relationships between these factors, manufacturers can optimize their processes, reduce waste, and improve overall efficiency. As another example, in the field of engineering, causal inference can be used for root cause analysis and identify underlying causes of faults and malfunctions in machines or electronic systems such as vehicles or unmanned drones (e.g. aircraft systems). By analyzing data from sensors, maintenance records, and incident reports, causal inference methods can help determine which factors are responsible for observed issues and guide targeted maintenance and repair actions. In genome-wide association studies (GWAS), causal inference may be used, for example, to associate between genetic variants and a trait or disease, accounting for potential confounding factors, which in turn may allow therapeutic treatments to be developed or refined.

Traditional approaches to causal inference are often limited to specific domains and require substantial domain knowledge for model specification. Moreover, existing methods struggle with the identification of causal structures and the learning of SCMs that are generalizable across different settings, especially when facing out-of-distribution (O.O.D) data. A generalizable approach is provided in examples herein that can infer causal relationships and generate counterfactuals effectively across various domains without extensive retraining or domain-specific tailoring.

Structural causal models (SCM) allow the modelling of true world data-generating processes. Learning SCMs from observational data is an NP-hard problem. The present method trains a generative causal model in two stages. The use of a first stage, where the causal order of variables in a dataset is inferred in a 'zero-shot' manner, allows the NP hard-search in conventional causal modelling to be by-passed. In a second stage, given the inferred causal order of variables from the first stage, only a fixed-point SCM needs to be learnt.

The examples described below consider a two-stage causal model generation process, supported by an initial training stage.

In the initial training stage, a first model is trained to infer the causal order of variables in based on a cross-domain training set, resulting in a trained model. This trained model is referred to as a causal ordering predictor. Once trained, the causal ordering predictor can be used in a 'zero-shot' manner to infer the causal order of variables in a dataset not used in training the model (including datasets from domains not encountered in training). The causal ordering predictor trained in the initial training stage can be reused with different causal models for different datasets.

The first and second stages are specific to a dataset received as input. In the first stage a causal ordering of the dataset is determined using the causal ordering predictor.

The second stage involves training a second model, namely a fixed-point SCM, which is specific to the dataset, and uses the predicted causal ordering from the first stage. In some examples, the fixed-point SCM is implemented as a neural network having an auto-encoder with a transformer-based architecture, which employs an attention mechanism. The fixed-point SCM is denoted below by parameterized function $\tau(\cdot,\cdot)$. Some embodiments use a specific form of fixed-point SCM, which is based on an additive noise model (ANM), denoted $\tau_{\text{ANM}}(\cdot,\cdot)$.

Modelling true world data-generating processes lies at the heart of empirical science. Structural Causal Models (SCMs) and their associated Directed Acyclic Graphs (DAGs) provide an increasingly popular answer to such problems by defining the causal generative process that transforms random noise into observations. However, learning them from observational data poses an ill-posed and NP-hard inverse problem in general.

SCMs and their associated DAGs provide a complete framework to describe the data generation process, and enable proactive interventions in this process to generate the effects on the data. Such unique properties offer a comprehensive understanding of the underlying generation process, which have made them popular in various fields such as. In most ML settings, only observational data are available, and as a result, the recovery of SCMs and their associated DAGs from observations has become one of the most fundamental tasks in causal ML. However, this inverse problem suffers from several limitations that arise mainly from its computational and modelling aspects, making it difficult to solve. Computationally, the combinatorial nature of the DAG space makes DAG learning an NP-hard problem. Besides, an SCM relies on functions satisfying the DAG structure to define causal mechanisms. Consequently, the modelling of these functions depends on an unknown DAG making SCM recovery an ill-posed problem in general.

In example embodiments herein, a new and equivalent formalism is proposed to describe SCMs, viewed as fixed-point problems on the causally ordered variables, and two important cases where they can be uniquely recovered given a topological ordering (TO) are shown. Based on this, a two-stage causal generative model is designed that first infers a predicted causal order in a zero-shot manner, thus by-passing the NP-hard search, and uses the predicted order to learn the generating fixed-point SCM. To infer TOs from observations, it is proposed to amortize the TO inference task on generated datasets by sequentially predicting the leaves of the graphs seen during training. To learn fixed-point SCMs, a transformer-based architecture is designed that exploits a new attention mechanism enabling the modelling of causal structures, and it is shown that this parameterization is consistent with the formalism presented. Finally, an extensive evaluation of each method is conducted individually, and it is shown that when combined, the proposed model outperforms various baselines on generated out-of-distribution problems.

In embodiments, a new framework to learn SCMs from data is introduced. By formulating SCMs as fixed-point problems on causally ordered variables, a specific attention-based architecture is introduced enabling SCMs to be parameterized and learned from data given the topological order. To recover TOs, it is proposed to amortize the learning of a zero-shot TO inference method on generated datasets, thus by-passing the NP-hard search and enabling their predictions at scale. When combined, these two models provide a complete framework to learn SCMs from observations. These contributions are summarised below.

- A new definition of SCMs is proposed, as fixed-point problems on the ordered variables, and its equivalence with the standard one is shown. Two important cases are exhibited where SCMs can be uniquely recovered from observations given the TO.

- Rather than searching for the TO in the set of permutations, it is proposed to amortize the learning of a zero-shot TO inference method from observations on synthetically generated datasets. To further reduce the complexity of this task, the leaves of the graphs seen during training are sequentially predicted.

- An attention-based architecture is introduced to parameterize fixed-point SCMs on the causally ordered nodes. The proposed model is an autoencoder exploiting a new attention mechanism to learn causal structures, and its consistency with the proposed formalism is shown.

- The performance of each proposed model is evaluated individually, and compared with the final causal generative model (obtained by combining them) against various state of the art methods on both causal discovery and inference tasks. It is shown that the proposed approach consistently outperforms others on generated out-of-distribution datasets.

Reference is made in the following to Algorithms 1, 2 and 3, set out in detail below.

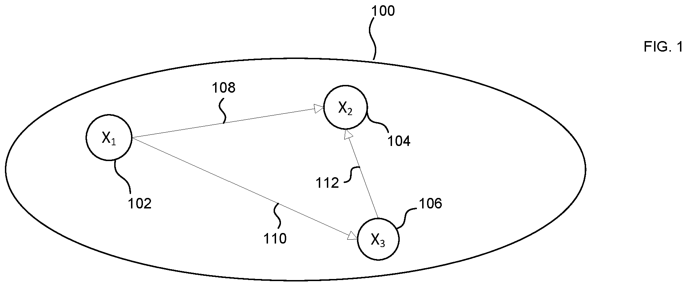

Figure 1 shows an observable space 100, with observables $X_1$ (102), $X_2$ (104) and $X_3$ (106). Arrows 108, 110 and 112 indicate a topological relationship between the observables 102-106 in the observable space 100. A causal graph in this scenario comprises the observables $X_1$ (102), $X_2$ (104) and $X_3$ (106) and the arrows 108, 110 and 112. The arrow 108 from $X_1$ (102) to $X_2$ (104) indicates that the observable $X_1$ (102) is before the observable $X_2$ (104) in the topological order.

This means that the causal relationship between $X_1$ (102) and $X_2$ (104) is that $X_1$ (102) causes $X_2$ (104). The arrow 110 from $X_1$ (102) to $X_3$ (106) indicates that the observable $X_1$ (102) is before the observable $X_3$ (106) in the topological order. This means that the causal relationship between $X_1$ (102) and $X_3$ (106) is that $X_1$ (102) causes $X_3$ (106). The arrow 112 from $X_3$ (106) to $X_2$ (104) indicates that the observable $X_2$ (102) is before the observable $X_3$ (106) in the topological order. This means that the causal relationship between $X_2$ (104) and $X_3$ (106) is that $X_2$ (104) causes $X_3$ (106). These causal relationships together imply that the overall topological order of the observables $X_1$ (102), $X_2$ (104) and $X_3$ (106) is $X_1 X_2 X_3$. Because the causal graph is a Directed Acyclic Graph (DAG), it is always possible to define such a topological order. For a given set of variables in a dataset, the topological ordering is generally not unique. Nevertheless, because the graph is directed and acyclic, there is always at least one possible topological order for the variables.

**Causal Learning through Amortization.**

The unsupervised nature of the inverse problem posed by the SCM recovery task, makes causal learning a non-convex and NP-hard optimization problem. To bypass this limitation, Lorch et al. (Lorch, L., Sussex, S., Rothfuss, J., Krause, A., and Schölkopf, B. Amortized inference for causal structure learning. Advances in Neural Information Processing Systems, 35:13104-13118, 2022) leverage amortization techniques to predict causal structures from observations in a supervised manner. More specifically, they propose to randomly generate synthetic SCMs to build pairs of observational samples and target DAGs, and train a transformer-based architecture to predict the DAGs from the samples. While amortization circumvents the original graph search problem, acyclicity is not guaranteed. In addition, the method aims to correctly predict full DAGs, thus suffering from a quadratic complexity w.r.t the number of variables. Here, the present approach proposes to drastically reduce the complexity of the amortized DAG inference approach by amortizing the inference of topological orders in a sequential manner instead. More precisely, the present approach sequentially infers the leaves of the DAGs given observational samples, from which the topological ordering is deduced. The present procedure is guaranteed to produce a permutation, while only seeking to infer leaves, thus enabling its application at scale.

**Causal Normalizing Flows**

Khemakhem et al. (Khemakhem, I., Monti, R., Leech, R., and Hyvarinen, A. Causal autoregressive flows. In International Conference on Artificial Intelligence and Statistics, pp. 3520-3528. PMLR, 2021) first introduced the connections between SCMs and normalizing flows (NFs). When considering the causally ranked variables, the data-generating process of an SCM induces a triangular map that pushes forward the exogenous distribution of the noise to the endogenous distribution of the observations. While Khemakhem et al. (2021) focus on affine NFs with additive noise, Javaloy et al. (Javaloy, A., Sánchez-Martín, P., and Valera, I. Causal normalizing flows: from theory to practice. arXiv preprint arXiv:2306.05415, 2023) generalize this viewpoint by considering instead triangular monotonic increasing maps (TMI). However, due to the monotonicity constraint, this framework does not provide an exact equivalence with standard SCMs that can in principle induce any triangular maps. In addition, these generating maps lack access to the structural equations defining an SCM. Instead, the present method proposse a strict generalization of the NF setting by modeling directly the system of equations defining an SCM as a fixed-point problem on the ordered nodes. The proposed formalism is exactly equivalent to standard SCMs, and as a by-product recovers the generating NFs which are not constraint to be monotonic. The identifiability result is also generalised of (Javaloy et al., 2023) and it is shown that not only the graph, but the full SCM can be recovered under TMI assumptions.

**Fixed-Point Formulation of SCMs**

A new and equivalent definition of SCMs, viewed as fixed-point problems on the ordered nodes, is introduced. The standard definition of SCMs and basic definitions are recalled. Then, the definition of fixed-point SCMs as well as the framework proposed are introduced, and their equivalences with standard SCMs is shown. Two important cases where fixed-point SCMs can be uniquely recovered given the TO are discussed.

**Preliminaries**

An SCM defines the data-generating process of d endogenous random variables, $X \sim \mathbb{P}_X$, from d exogenous and independent random variables, $N \sim \mathbb{P}_N$, using a function F and a graph $\mathcal{G}$. More precisely, endogenous variables X are defined by the SCM as follows:

$$X_i = F_i(\mathbf{PA}_{\mathcal{G}}(X_i), N_i), \quad \forall i \in \{1, \ldots, d\} \qquad (1)$$

where $X := [X_1,...,X_d]$, $N := [N_1,...,N_d]$, $F := [F_1,...,F_d]$ and $\mathbf{PA}_{\mathcal{G}}(X_i)$ denotes the subset of variables in $\{X_1,...,X_d\}$ that are the parents of $X_i$ according to the graph $\mathcal{G} \in \{0,1\}^{d \times d}$ satisfying $\mathcal{G}_{i,j} = 1$ i.i.f $j$. This graph is assumed to be directed and acyclic (DAG). For such graphs, it is always possible to causally order the nodes. More formally, there exists a permutation $\pi$, i.e. a bijective mapping $\pi : \{1,...,d\} \to \{1,...,d\}$, satisfying $\pi(i) < \pi(j)$ if j is a parent of i. Such a permutation is one way of expressing a topological order (TO). The following is denoted: $P_\pi$ the permutation matrix associated, defined $[P_\pi]_{i,j} = 1$ if $\pi^{-1}(i) = j$ and 0 otherwise, $\Sigma_d$ the set of permutation matrices of size $d$, and $\mathcal{S}(F, \mathbb{P}_N)$ the SCM associated to F and $\mathbb{P}_N$. In the following, it is assumed that (i) all the variables $X_i$ and $N_i$ live in $\mathbb{R}$, (ii) the functions $F_i$ are differentiable, and (iii) structural minimality holds.

Structural Causal Models (SCMs) are widely used in the causal literature to express causal functional relationships between random variables. As they require a graph to represent the causal structure some basic graphical terminologies are reviewed:

Graph Terminology. Let $d \geq 1$ an integer, $V := \{1, ..., d\}$ a set of indices and $\varepsilon$ a subset of $V^2$. Then, $\mathcal{G} := (V, \mathcal{E})$ is called a graph on d nodes $V$ with edges $\varepsilon$. An edge $(i, j) \in \varepsilon$ is called directed if $(j, i) \notin \mathcal{E}$. The graph $\mathcal{G}$ is called directed if all its edges are directed. A node i is called a parent of j if $(i, j) \in \varepsilon$ and (i, j) is directed, that is $(j, i) \notin \mathcal{E}$. The set of parents of a node j is denoted as PA(j) and its cardinal as $c_j$. To refer explicitly to the parents of a node j, the sequence of its parents ranked in the increasing order $(pa_1(j),..., pa_{c_j}(j))$ is denoted $(pa_k(j) < pa_q(j)$ if $k < q.)$. A sequence of at least two nodes $(i_1,...,i_m)$ with $m \geq 2$, is called a directed path from $i_1$ to $i_m$ of $\mathcal{G}$ if for all $k \in [|1, m-1|]$, $(i_k, i_k+1)$ is a directed edge of G. A directed path from a node i to itself is called a directed cycle. Finally G is called a directed acyclic graph (DAG) if it is directed and does not contain directed cycle.

Topological Ordering:. An important notion from the graph terminology is the notion of topological ordering. When the graph $\mathcal{G}$ is a DAG, it is always possible to order the nodes in a specific manner. The notation j is called a descendant of i in $\mathcal{G}$ if there exists a directed path from i to j in $\mathcal{G}$. The set of all the descendants of a node i is denoted as DE(i). If a node does not have any descendants, it is called a leaf node. If a node does not have any parents, it is called a root node. When $\mathcal{G}$ is a DAG, there exists a permutation $\pi$, that is a bijective mapping

$$\pi : \{1, \ldots, d\} \to \{1, \ldots, d\},$$

satisfying $\pi(i) < \pi(j)$ if $j \in DE(i)$. Such a permutation is called a topological ordering of $\mathcal{G}$ and it does not have to be unique. Note that the node $\pi^{-1}(1)$ is a root node, and the node $\pi^{-1}(d)$ is a leaf node. In the following $P_\pi \in \{0, 1\}^{d \times d}$ denotes the $[P_\pi]_{i,j} = 1$ if $(i) = j$ permutation matrix associated, that is and 0 otherwise, and $\Sigma_d$ denotes the set of permutation matrices of size d.

Structural Causal Models. A structural causal model is a generative model that aims at modelling the causal relationships between random variables. The model consists of three main components: (i) a sequence of d jointly independent exogenous random variables, (ii) a DAG on d nodes, and (iii) a sequence of d measurable functions. The definition of these functions depends both on the exogenous variables and, most importantly, on the graph. More formally, let "$n_1,...,n_d \geq 1$, where d are integers, and $N_1,..., N_d$, where d are jointly independent random variables on respectively $\mathbb{R}^{n_1}, \ldots, \mathbb{R}^{n_d}$, and G is a DAG on d nodes. Let also $t_1,...,t_d \geq 1$, where d are integers, and for all i $\in \{1, ..., d\}$, let $f_i$ be a measurable function satisfying $f_i : \mathbb{R}^{p_i} \times \mathbb{R}^{n_i} \to \mathbb{R}^{t_i}$, where $p_i := \Sigma_{k \in \mathbf{PA}(i)} t_k$ if PA(i) $\neq \emptyset$, $p_i := 0$ otherwise. Then the SCM associated to ($\mathcal{G}$, $(N_1,..., N_d)$, $(f_1, ..., f_d)$), and denoted $S(( \mathcal{G}, (N_1,..., N_d), (f_1, ..., f_d))$ is defined as the collections of the following d (structural) equations on the $X_i$'s:

$$X_i = f_i(\mathbf{PA}(X_i), N_i), \quad \forall i \in \{1, \ldots, d\} \qquad (8)$$

where $\mathbf{PA}(X_i) := [X_{\mathrm{pa}_1(i)}, \ldots, X_{\mathrm{pa}_{c_i}(i)}] \in \mathbb{R}^{p_i}$. The random variables $X_i$ are implicitly defined as the solution of the system (8) which is unique thanks to the DAG structure of $\mathcal{G}$. This general definition of SCM allows the existence of an edge $(j,i)$ in $\mathcal{G}$ that has no influence, meaning that the function $f_i$ can be independent of the variable $x_j$. In order to exclude such situations, it is assumed in the following that the $f_i$'s always depend on all the parents PA($i$). More formally, the following assumption is considered.

Assumption (Sturctural Minimality): It is assumed that for all $i \in \{1,\ldots,d\}$, there does not exist a $k \in \{1,\ldots,c_i\}$ and a function

$$g_i : \mathbb{R}^{p_i - t_{\mathrm{pa}_k(i)}} \times \mathbb{R}^{n_i} \to \mathbb{R},$$

such that for all $x_{\mathrm{pa}_1(i)} \in \mathbb{R}^{t_{\mathrm{pa}_1(i)}}, \ldots, x_{\mathrm{pa}_{c_i}(i)} \in \mathbb{R}^{t_{\mathrm{pa}_{c_i}(i)}}$ and $z_i \in \mathbb{R}^{n_i}$:

$$f_i\left(x_{\mathrm{pa}_1(i)}, \ldots, x_{\mathrm{pa}_{c_i}(i)}, z_i\right) =$$

$$g_i\left(x_{\mathrm{pa}_1(i)}, \ldots, x_{\mathrm{pa}_{k-1}(i)}, x_{\mathrm{pa}_{k+1}(i)}, \ldots, x_{\mathrm{pa}_{c_i}(i)}, z_i\right).$$

Therefore a SCM defines a causal generative process of the $X_i$'s obtained from the exogenous variables $N_i$'s, where the causal structure is given by $\mathcal{G}$, and the functional relationships are given by $f_i$'s. In the following the exogenous variables $N_i$ are referred to a as the noise variables. Two mild assumptions are now presented:

Assumption: Let $S(\mathcal{G}, (N_1,\ldots,N_d), (f_1,\ldots,f_d))$ be an SCM as defined in (8). Assume that for all $i \in \{1, \ldots, d\}$, $n_i = t_i = 1$. This assumption restricts the framework to the case where both the exogenous variables $N_i$ and the generated variables $X_i$ are real-valued. It is made mostly to simplify the notations.

Assumption: Let $S(\mathcal{G}, (N_1, \ldots, N_d), (f_1, \ldots, f_d))$ be an SCM as defined in (8). It is assumed that the $f_i$'s are differientiable. This assumption is used in later where the definition of an SCM is revisited and another formalism is proposed on which the proposed causal generative model is built.

**Formal Definition of Fixed-Point SCMs**

**A Random Variable Perspective**

A random variable perspective of the fixed-point formulation of SCMs is presented. Let $S(\mathcal{G}, (N_1,\ldots,N_d), (f_1,\ldots,f_d))$ be an SCM as defined in (8). $F^{\mathcal{G}} : \mathbb{R}^d \times \mathbb{R}^d \to \mathbb{R}^d$, is defined, satisfying $\forall i \in \{1,\ldots,d\}$, $x, n \in \mathbb{R}^d$:

$$F_i^{\mathcal{G}}(x,n) := f_i(x_{\mathrm{pa}_1(i)}, \ldots, x_{\mathrm{pa}_{c_i}(i)}, n_i),$$

where $F^{\mathcal{G}}(x,n) := [F_1^{\mathcal{G}}(x,n), \ldots, F_d^{\mathcal{G}}(x,n)]$, $x := [x_1, \ldots, x_d]$. Then the system of equations introduced in (8) can be equivalently reformulated as the following fixed-point problem on X:

$$X = F^{\mathcal{G}}(X, N). \tag{9}$$

Here the causal structure, previously given by $\mathcal{G}$ in (8), is implicitly expressed in the definition of the function $F^{\mathcal{G}}$ and can be recovered from F only.

Lemma: Let $S(\mathcal{G}, (N_1,\ldots,N_d, (f_1,\ldots,f_d))$ be an SCM and $F^{\mathcal{G}}$ as defined in (9). $(i,j) \in \varepsilon$ i,i,f, thus

$$(x, n) \rightarrow \frac{\partial F_i^{\mathcal{G}}}{\partial x_i}(x, n) \neq 0.$$

Proof. This result follows directly from the structure of $\mathcal{F}^{\mathcal{G}}$: $(j, i)$ is an edge i.f.f there exists k such that $pa_k(i) = j$, and by the minimimality assumption i.i.f $(x, n) \rightarrow \frac{\partial f_i}{\partial x_j}(\cdot, \cdot) \neq 0$ and therefore i.f.f $\frac{\partial F_i^{\mathcal{G}}}{\partial x_i}(\cdot, \cdot) \neq 0$.

Therefore the causal structure of an SCM can be recovered by computing the Jacobian w.r.t $x$ of $F^{\mathcal{G}}$. Now, $\pi$ denotes a topological ordering of $\mathcal{G}$ and $P_\pi \in \Sigma_d$ is the permutation matrix associated. Then by defining $F_\pi^{\mathcal{G}} : \mathbb{R}^d \times \mathbb{R}^d \rightarrow \mathbb{R}^d$ such that for all $x, n \in \mathbb{R}^d$

$$F_\pi^{\mathcal{G}}(x, n) := \qquad\qquad (10)$$
$$[F_{\pi^{-1}(1)}^{\mathcal{G}}(P_\pi^T x, P_\pi^T n), \dots, F_{\pi^{-1}(d)}^{\mathcal{G}}(P_\pi^T x, P_\pi^T n)],$$

an equivalent formulation of (9) is obtained defined as the following fixed-point problem on X:

$$X = P_\pi^T F_\pi^{\mathcal{G}}(P_\pi X, P_\pi N). \qquad\qquad (11)$$

The main advantage of the formulation obtained in (11) is that $F_\pi^{\mathcal{G}}$ has now a very simple structure.

Lemma: *Let* S($\mathcal{G}$, $(N_1,...,N_d)$, $(f_1,...,f_d)$) *be an SCM as defined in (8) and $\pi$ a topological ordering of $\mathcal{G}$. Then* $F_\pi^{\mathcal{G}}$ *as defined in (10), satisfies for all* $x, n \in \mathbb{R}^d$:

$$[Jac_1 F_\pi^{\mathcal{G}}(x, n)]_{i,j} = 0, \quad if \quad j \geq i,$$

*and*

$$[Jac_2 F_\pi^{\mathcal{G}}(x, n)]_{i,j} = 0, \quad if \quad i \neq j.$$

Proof. Under the assumptions discussed above, $F^{\mathcal{G}}$ is therefore differentiable, and directly implies that for all $x, n \in \mathbb{R}^d$, and $k \in \{1, 2\}$, $Jac_k F_\pi^{\mathcal{G}}(x, n) = P_\pi Jac_k F^{\mathcal{G}}(P_\pi^T x, P_\pi^T n) P_\pi^T$. In addition, for all $w, z \in \mathbb{R}^d$, $[Jac_1 F^{\mathcal{G}}(w, z)]_{i,j} = 0$ not a parent of i and $[Jac_2 F^{\mathcal{G}}(w, z)]_{i,j} = 0$ if $i \neq j$, then using the rearrangement given by $P_\pi$, the result is deduced.

Therefore, the function $F_\pi^{\mathcal{G}}$, defining the new system of equations, has to admit a strictly lower-triangular Jacobian w.r.t $x$ and a diagonal Jacobian w.r.t $n$. The definition of a fixed-point SCM on random variables is now presented:

Definition: Let $P \in \Sigma_d$ be a permutation matrix of size $d$, $N_1,..., N_d$, $d$ jointly independent real-valued random variables and $H \in F_d$. Then the (random variable) fixed-point SCM associated, denoted $S_{fp}(P, (N_1,...,N_d), H)$ is denoted as the following fixed-point problem on X:

$$X = P^T H(PX, PN). \qquad\qquad (12)$$

**Links with Normalizing Flows**

As a by-product of the proposition in equation (4), the fixed-point formulation can also recover the normalizing flow induced by a standard SCM $\mathcal{S}(F, \mathbb{P}_N)$ as defined above.

More formally, let $S_{\text{fp}}(P, \mathbb{P}_N, H)$ be an equivalent fixed-point SCM according to the proposition in equation (4), and let $T : n \in \mathbb{R}^d \to H(\cdot, n)^{\circ d}(0_d) \in \mathbb{R}^d$. It is observed now that T is a triangular map that pushes forward the ordered noise distribution $P \# \mathbb{P}_N$ towards the ordered observational one $P \# \mathbb{P}_X$ $P$ and therefore its inverse (if it exists), defines the normalizing flow of the SCM. The map T, describing the static generative process of the SCM, is not restricted to be a TMI, and therefore cannot be recovered in general by the framework of (Javaloy et al., 2023).

Before introducing the new definition of SCMs, some notations are established below. Consider a Polish space $Z$, $P(Z)$ denotes the set of Borel probability measures on $Z$, and for p ≥ 1 an integer, $P_p(Z)$ denotes the set of p-integrable probability measures on $Z$. $P(Z)^{\otimes d}$ denotes the set of d jointly independent distributions over $Z^d$. For z E Z, $\delta_z$ denotes the Dirac distribution in z. For $\mathbb{Q} \in \mathcal{P}(\mathbb{R}^d), i \in \{1, 2\}$,

$$\Pi_{i,\mathbb{Q}} := \{\gamma \in \mathcal{P}(\mathbb{R}^d \times \mathbb{R}^d) : p_i \# \gamma = \mathbb{Q}\}$$

where $p_1 : (x, y) \in \mathbb{R}^d \times \mathbb{R}^d \to x \in \mathbb{R}^d, p_2 : (x, y) \in \mathbb{R}^d \times \mathbb{R}^d \to y \in \mathbb{R}^d$, and # is the push-forward operator. Next, a simple structural condition on functions is introduced.

Condition: $H : \mathbb{R}^d \times \mathbb{R}^d \to \mathbb{R}^d$ is differentiable, and satisfies for all

$$\begin{aligned} [\text{Jac}_1 H(x, n)]_{i,j} = 0, \quad & \text{if} \quad j \geq i, \quad \text{and} \\ x, n \in \mathbb{R}^d \quad [\text{Jac}_2 H(x, n)]_{i,j} = 0, \quad & \text{if} \quad i \neq j, \end{aligned} \qquad (2)$$

$$(2)$$

where $\text{Jac}_1 H$ and $\text{Jac}_2 H$ are the Jacobians of H w.r.t the first and second variables, i.e. $x$ and n respectively. This condition ensures that the function H has to admit a strictly lower-triangular Jacobian w.r.t x and a diagonal Jacobian w.r.t n. The function space, that is $\mathcal{F}_d := \{H : \mathbb{R}^d \times \mathbb{R}^d \to \mathbb{R}^d \text{ s.t. } H\}$ satisfies the condition in equation 2}.

**Definition of Fixed-Point SCM**

Let $P \in \Sigma_d$ be a permutation matrix of size d, $\mathbb{P} \in \mathcal{P}(\mathbb{R})^{\otimes d}$ a jointly independent distribution over $\mathbb{R}^d$ and $H \in F_d$. The fixed-point SCM associated, denoted $S_{\text{fp}}(P, \mathbb{P}, H)$, is defined as the following fixed-point problem on $\gamma \in \Pi_{2,\mathbb{P}}$:

$$(P^T H(P \cdot, P \cdot) - p_1(\cdot, \cdot)) \# \gamma = \delta_0. \qquad (3)$$

The fixed-point formulation becomes clear when one adopts a random variable perspective. Indeed for $(X, N) \sim \gamma \in \Pi_{2,\mathbb{P}}$, $\gamma$ is a solution of (3) i.i.f X solves $PX = H(PX, PN)$. In the following proposition it is shown that the solution $\gamma$ of the fixed-point SCM is unique.

Proposition: Let $S_{fp}(P, \mathbb{P}, H)$ be a fixed-point SCM as defined above. Then the fixed-point problem (3) on $\gamma \in \Pi_{2,\mathbb{P}}$ admits a unique solution. This proposition ensures that a fixed-point SCM entails a unique coupling $\gamma$, and as a direct consequence a unique observational distribution $\mathbb{P}_X := p_1 \# \gamma$. In the following $\gamma(P, \mathbb{P}, H) \in \Pi_{2,\mathbb{P}}$ denotes the solution of (3).

Proof of proposition: Let the following be defined:

$$T : n \to H(\cdot, n)^{\circ d}, \mathbb{P}_{\boldsymbol{X}} := (P^T \circ T \circ P) \# \mathbb{P}$$ and let the following be denoted

$F : (x, n) \to P^T H(P_x, P_n)$. Then thanks to the structure of H, one obtains that for any

$$n \in \mathbb{R}^d, F(P^T \circ T \circ Pn, n) = P^T \circ T \circ Pn$$ from which it follows that

$$(P^T \circ T \circ P, \mathrm{I}_d) \# \mathbb{P} \in \Pi_{2, \mathbb{P}}$$ solves (3). In addition, if $\gamma$ solves (3), then for $(\boldsymbol{X}, \boldsymbol{N}) \sim \gamma$, the following is obtained:

$$X = P^T T(PN)$$

from which follows that $$\gamma = (P^T \circ T \circ P, \mathrm{I}_d) \# \mathbb{P} \in \Pi_{2, \mathbb{P}}$$ which concludes the proof.

In the present definition of fixed-point SCMs, note that a DAG is not used to define the structure of the function H. In fact, H has a simple structure given by the condition discussed above in equation 2 and, the causal graph can easily be defined from it.

**Causal Graph of Fixed-Point SCM)**

Definition: Let $$\mathcal{S}_{\mathrm{fp}}(P, \mathbb{P}, H)$$ be a fixed-point SCM. Then it is said that j is a parent of i if $(x, n) \to [\mathrm{Jac}_1 P^T H (Px, Pn)]_{i,j} \neq 0$. Note that as H has to satisfy the condition in equation 2, then the graph induced by this definition is necessarily a DAG.

**Equivalent Formulation**

The equivalence between the present formalism and the standard definition of SCMs is shown.

Proposition: Let $$\mathcal{S}(F, \mathbb{P}_{\boldsymbol{N}})$$ be an SCM as defined in equation (1), $\pi$ a topological ordering of the corresponding DAG, and $P_\pi \in \Sigma_d$ the associated permutation matrix. Then, there exists a unique fixed-point SCM of the form $$\mathcal{S}_{fp}(P_\pi, \mathbb{P}_{\boldsymbol{N}}, H)$$ such that for all $i \in \{1,...,d\}$, and $$x, n \in \mathbb{R}^d,$$

$$[P_\pi^T H(P_\pi x, P_\pi n)]_i = F_i(\boldsymbol{PA}(x_i), n_i) . \qquad (4)$$

Reciprocally, for any fixed-point SCM with TO P, there exists a unique SCM as defined above with same noise distribution such that P is a valid TO and equation (4) is satisfied.

Proof of proposition: Let $$\mathcal{S}(F, \mathbb{P}_{\boldsymbol{N}})$$ be a standard SCM and $P_\pi$ a topological ordering associated. Let now $H_1$ and $H_2$ satisfying (2.6). Then one obtains for all i and x, n that

$$[P_\pi^T H_1(P_\pi x, P_\pi n)]_i = [P_\pi^T H_2(P_\pi x, P_\pi n)]_i$$ from which follows directly that $H_1 = H_2$. To show existence, the following is first defined:

$$\tilde{\boldsymbol{PA}}_i : x \in \mathbb{R}^d \to M_i x \in \mathbb{R}$$ where $M_i \in \{0, 1\}^{d \times d}$ and satisfies $M_{j,j} = 1$ if $j \in PA(x_i)$ and 0 otherwise. Now, let $\tilde{F} := [\tilde{F}_1,...,\tilde{F}_d]$ such that for all $$i, \tilde{F}_i : \mathbb{R}^d \to \mathbb{R}$$ satisfying for all $$x, n \in \mathbb{R}^d \; \tilde{F}_i(x, n) = F_i(\boldsymbol{PA}(x_i), n_i)$$. Then the following can be defined $H := [H_1,..., H_d]$ as $H_i(x, n)$ $= P\tilde{F}_i(P^T x, P^T n)$. Reciprocally, let $$\mathcal{S}_{\mathrm{fp}}(P, \mathbb{P}, H)$$ be fixed-point SCM and let denote its graph associated as defined above. Let now $$\mathcal{S}(F^{(1)}, \mathbb{P})$$ and $$\mathcal{S}(F^{(2)}, \mathbb{P})$$ two standard SCM with DAG associated $\mathcal{G}_1$ and $\mathcal{G}_2$ such that they satisfy (4) and P is a topological order of both. Then, one obtains that for all I and x, n

$$F_i^{(1)}(\mathbf{PA}_1(x_i), n_i) = F_i^{(2)}(\mathbf{PA}_2(x_i), n_i) \ .$$

Now using the minimality assumption, one deduces that the set of parents are the necessarily the same, and from which it follows that $F_i^{(1)} = F_i^{(2)}$ . The existence follows the construction obtained above.

**Partial Recovery**

Now, the partial recovery of fixed-point SCMs is investigated, that is when the TO is given. To do so, some clarifying notations are introduced: $\mathbb{Q} \in \mathcal{P}(\mathbb{R}^d)$ and $W \in \Sigma_d$, $\mathcal{A}_W(\mathbb{Q}) := \{(W, \mathbb{P}, H): \mathbb{P} \in \mathcal{P}(\mathbb{R})^{\otimes d}$ , $H \in F_d$, $p_1 \# \gamma(W, \mathbb{P}, H) = \mathbb{Q}$ \}, the set of fixed-point SCMs with TO generating the observational distribution $\mathbb{Q}$ .

**Partial Recovery Problem**

Let $\mathcal{S}_{\mathrm{fp}}(P, \mathbb{P}_N, H)$ be a fixed-point SCM generating $\gamma(P, \mathbb{P}_N, H)$ with left marginal $\mathbb{P}_X := p_1 \# \gamma(P, \mathbb{P}_N, H)$ . Given P and $\mathbb{P}_X$ , is it possible to recover uniquely the generating fixed-point SCM $\mathcal{S}_{\mathrm{fp}}(P, \mathbb{P}_N, H)$ ? Or more formally, is $\mathcal{A}_P(\mathbb{P}_X)$ a singleton? In the next proposition, it is shown that the partial recovery of fixed-point SCMs guarantees that of standard SCMs.

Proposition: Let $P_X \in \mathcal{P}(\mathbb{R}^d)$ , $P \in \Sigma_d$ and assume that $\mathcal{A}_P(\mathbb{P}_x)$ is a singleton. Then, there exists a unique SCM of the form $\mathcal{S}(F, \mathbb{P})$ generating $\mathbb{P}_X$ such that P is a valid topological ordering of its associated DAG. Therefore, thanks to this proposition, solving the present problem is enough to ensure the partial recovery of standard SCMs. Two important cases, where this recovery problem admits a positive answer, are exhibited.

Proof of proposition: Let there exist two standard SCMs $\mathcal{S}(F_1, \mathbb{P}_{N_1})$ and $\mathcal{S}(F_2, \mathbb{P}_{N_2})$ generating $\mathbb{P}_X$ . As P is a valid topological ordering for both SCMs, then thanks to the previous proposition, there exists $H_1, H_2 \in F$ such that $\mathcal{S}_{\mathrm{fp}}(P, \mathbb{P}_{N_1}, H_1)$ , $\mathcal{S}_{\mathrm{fp}}(P, \mathbb{P}_{N_1}, H_1)$ generates $P_X$. Then because $\mathcal{A}_P(\mathbb{P}_X)$ is a singleton, $H_1 = H_2$ and $\mathbb{P}_{N_1} = \mathbb{P}_{N_2}$ which concludes the proof.

**Additive Noise Model**

Proposition: Let $P \in \Sigma_d$ and $\mathbb{P}_X \in \mathcal{P}_2(\mathbb{R}^d)$ . Let us also denote $\mathcal{F}_d^{ANM} := \{H \in \mathcal{F}_d: H(x, n) = h(x) + g(x) \odot n, \ g > 0\}$ and $\mathcal{A}_P^{ANM}(\mathbb{P}_X) := \{(P, \mathbb{P}, H) \in \mathcal{A}_P(\mathbb{P}_X): \mathbb{P} \in \mathcal{P}_2(\mathbb{R})^{\otimes d}, H \in \mathcal{F}_d^{ANM}, \mathbb{E}_{N \sim \mathbb{P}}(N) = 0_d, \mathbb{E}_{N \sim \mathbb{P}}(N^2) = 1_d\}$ . Then $\mathcal{A}_P^{ANM}(\mathbb{P}_X)$ admits at most 1 element $\mathbb{P}_{PX}$ a.s.

Therefore if the search is restricted to Additive Noise Models (ANMs), then given $\mathbb{P}_X$ and P, it is possible to recover uniquely the fixed-point SCM $\mathbb{P}_{PX}$ a.s.

A generalization of the ANM case is shown where the additive form of the model is relaxed by assuming instead that the functions are monotonic with respect to the exogenous variables.

Proof of proposition: Let $(P, \mathbb{P}, H) \in \mathcal{A}_P^{ANM}(\mathbb{P}_X)$. Then for $(X, N) \sim \gamma(P, \mathbb{P}, H)$

$$PX = H(PX, PN)$$
$$= h(PX) + g(PX) \odot PN.$$

Now let $Y = PX$. Because H has to satisfy (2) and the $N_i$-s re independent and have 0 mean, it can be deduced by taking the conditional expectancy that

$$h_i(y) = \mathbb{E}(Y_i | (Y_1, \ldots, Y_{i-1}) = (y_1, \ldots, y_{i-1})), \ \mathbb{P}_Y \text{ a.s.}$$

and so for all i where $h = [h_1, \ldots, h_d]$, therefore the $h_i$'s are $\mathbb{P}_Y$ almost surely unique. Now by considering the conditional second moment of the residual, it is obtained for all i that:

$$\mathbb{E}((Y_i - h_i(Y))^2 | (Y_1, \ldots, Y_{i-1}) = (y_1, \ldots, y_{i-1})) = g_i(y)^2, \ \mathbb{P}_Y \text{ a.s.}$$

As the variances of $N_i$ are 1. Therefore $y \to g_i(y)^2$ are $\mathbb{P}_Y$ almost surely unique and thanks to the positivity of g, it can be deduced that $y \to g_i(y)$ are $\mathbb{P}_Y$ a.s. unique, from which follows that

$$P_{PN} = \frac{I_d - h}{g} \# \mathbb{P}_Y$$

is uniquely defined (as g > 0) and that concludes the proof.

Theorem: Let $P \in \Sigma_d, \ \mathbb{P}_N \in \mathcal{P}(\mathbb{R})^{\otimes d}, \ \mathbb{P}_X \in \mathcal{P}(\mathbb{R}^d)$ and let $\mathcal{P}(\mathbb{R}^d)$ and let it be assumed that both $\mathbb{P}_N$ and $\mathbb{P}_X$ are absolutely Lebesgue measure continuous w.r.t the Lebesgue measure and

$$\mathcal{A}_P^{MON}(\mathbb{P}_N, \mathbb{P}_X) := \{(P, \mathbb{P}_N, H) : H \in \mathcal{F}_d^{MON}, \ p_1 \# \gamma(P, \mathbb{P}_N, H) = \mathbb{P}_X\}. \text{ Then}$$

$$\mathcal{A}_P^{MON}(\mathbb{P}_N, \mathbb{P}_X) \text{ Note that } \mathcal{F}_d^{ANM} \subset \mathcal{F}_d^{MON}$$ and therefore this theorem generalizes the recovery of the Additive Noise model. The following is also denoted:

$$\mathcal{F}_d^{MON} := \{H \in \mathcal{F}_d : [\text{Jac}_2 H(\cdot, \cdot)]_{i,i} \geq 0, \ \forall i\}, \text{ and}$$

$$\mathcal{A}_P^{MON}(\mathbb{P}_N, \mathbb{P}_X) := \{(P, \mathbb{P}_N, H) : H \in \mathcal{F}_d^{MON}, \ p_1 \# \gamma(P, \mathbb{P}_N, H) = \mathbb{P}_X\}.$$

Then $\mathcal{A}_P^{MON}(\mathbb{P}_N, \mathbb{P}_X)$ admits at most one element $\mathbb{P}_{PX} \otimes \mathbb{P}_{PN}$ a.s. Note that $\mathcal{F}_d^{ANM} \subset \mathcal{F}_d^{MON}$ and therefore this theorem generalizes the recovery of the Additive Noise Model proposition when the distribution of the exogenous variables is known.

Proof of Theorem: The following lemma is first presented: Let $H_1, H_2 \in \mathcal{F}_d$ and let $\mathbb{P}_N \in \mathcal{P}(\mathbb{R})^{\otimes d}$ be a a jointly independent distribution. Then if

$$(H^{(1)}(\cdot, n))^{\circ d} = (H^{(2)}(\cdot, n))^{\circ d}, \quad \mathbb{P}_N \text{ a.s.} \tag{27}$$

and by denoting $\mathbb{P}_{\boldsymbol{X}} = (H^{(1)}(\cdot, n))^{\circ d} \# \mathbb{P}_{\boldsymbol{N}}$, then $H_1(x, n) = H_2(x, n)$ $\mathbb{P}_{\boldsymbol{X}} \otimes \mathbb{P}_{\boldsymbol{N}}$ $a.s.$

Let the following be assumed:

$$(H^{(1)}(\cdot, n))^{\circ d} = (H^{(2)}(\cdot, n))^{\circ d} = h(n), \quad \mathbb{P}_{\boldsymbol{N}} \text{ a.s.} \tag{28}$$

Now, using the structure of $H^{(i)}$ induced by (2), observe that for all $x, n \in \mathbb{R}^d$ and $k \in \{1,...,d\}$:

$$H_k^{(i)}(x, n) = H_k^{(i)}([x_1, \ldots, x_{k-1}, 0, \ldots, 0], [0, \ldots, n_k, \ldots, 0])$$

where $H^{(i)}(x, n) = [H_1^{(i)}(x, n), \ldots, H_d^{(i)}(x, n)]$, $x = [x_1,...,x_d]$ and $n = [n_1,...,n_d]$. In the following, for all

$k \geq 1, x, n \in \mathbb{R}^d, (H^{(i)}(\cdot, n))^{\circ k}(x) = [[(H^{(i)}(\cdot, n))^{\circ k}(x)]_1, \ldots, [(H^{(i)}(\cdot, n))^{\circ k}(x)]_d] \in \mathbb{R}^d$. Now from (27) and using the triangular structure of $H^{(i)}$ observe that for all $k \in \{1,...,d\}$ and $x \in \mathbb{R}^d$, the following is obtained $\mathbb{P}_{\boldsymbol{N}}$ a.s.

$$[\bar{h}_1(n_1), \ldots, \bar{h}_k(n_1, \ldots, n_k)] =$$
$$[[(H^{(i)}(\cdot, n))^{\circ 1}(x)]_1, \ldots, [(H^{(i)}(\cdot, n))^{\circ k}(x)]_k].$$

Where for all $j \in \{1,...,d\}$, $\bar{h}_j(n_1,...,n_j) := h_j(n_1,...,n_d)$ and $h = [h_1,...,h_d]$ and $h = \{h_1,...,h_d\}$ which are well defined as h is a triangular map. The goal now is to show that for $k \in \{1,...,d\}$,

$$H_k^{(1)}(x, n) = H_k^{(2)}(x, n), \quad \mathbb{P}_{\boldsymbol{X}} \otimes \mathbb{P}_{\boldsymbol{N}} \text{ a.s.},$$

which will conclude the proof. First Observe that for all $x \in \mathbb{R}^d$

$$[(H^{(i)}(\cdot, n))^{\circ d}(x)]_1 = H_1^{(i)}(x, n) = h_1(n), \quad \mathbb{P}_{\boldsymbol{N}} \text{ a.s.}$$

Consider $H^{(i)}(\cdot, n))^{\circ d}$. For that purpose, denote for $x, n \in \mathbb{R}^d$ and $k \in \{1,...,d\}$, $x_k(n) := [(H^{(i)}(\cdot, n))^{\circ 1}(x)]_1,...,[(H^{(i)}(\cdot, n))^{\circ k}(x)]_k, 0,...,0]$, $n_{1,k} := [n_1, \ldots, n_k] \in \mathbb{R}^k$ and $\bar{h}_{1,k} := [\bar{h}_1,...,\bar{h}_k]$. Then for all $x, n \in \mathbb{R}^d$ and $k \in \{2,...,d\}$

$$[(H^{(i)}(\cdot, n))^{\circ d}(x)]_k$$
$$= H_k^{(i)}([\bar{x}_{k-1}(n), 0, \ldots, 0][0, \ldots, n_k, \ldots, 0])$$

from which follows that for all $x \in \mathbb{R}^d$, $\mathbb{P}_{\boldsymbol{N}}$ a.s. is such that

$$[(H^{(i)}(\cdot, n))^{\circ d}(x)]_k$$
$$= H_k^{(i)}([\tilde{h}_{1,k-1}(n_{1,k-1}), 0, \ldots, 0], [0, \ldots, n_k, \ldots, 0]).$$

It can be deduced from (29) that $\mathbb{P}_{\boldsymbol{N}}$ a.s. is such that

$$H_k^{(1)}([\tilde{h}_{1,k-1}(n_{1,k-1}), 0, \ldots, 0], [0, \ldots, n_k, \ldots, 0])$$
$$= H_k^{(2)}([\tilde{h}_{1,k-1}(n_{1,k-1}), 0, \ldots, 0], [0, \ldots, n_k, \ldots, 0])$$

Now using the jointly independence of $\mathbb{P}_N$, and by denoting $\mathbb{P}_{N_{1,k}} := \mathbb{P}_{N_1} \otimes \ldots \mathbb{P}_{N_k}$, it is obtained that $\mathbb{P}_{N_{1,k-1}} \otimes \mathbb{P}_N$

$$H_k^{(1)}([\bar{h}_{1,k-1}(n_{1,k-1}), 0, \ldots, 0], [0, \ldots, n_k, \ldots, 0])$$
$$= H_k^{(2)}([\bar{h}_{1,k-1}(n_{1,k-1}), 0, \ldots, 0], [0, \ldots, n_k, \ldots, 0])$$

And as $\tilde{h}_{1,k-1}\#\mathbb{P}_{N_{1,k-1}} = \mathbb{P}_{PX_{1,k-1}}$, it is deduced that $\mathbb{P}_{PX} \otimes \mathbb{P}_N$ a.s.

$$H_k^{(1)}([x_1, \ldots, x_k, 0, \ldots, 0], [0, \ldots, n_k, \ldots, 0])$$
$$= H_k^{(2)}([x_1, \ldots, x_k, 0, \ldots, 0], [0, \ldots, n_k, \ldots, 0])$$

from which follows that

$$H_k^{(1)}(x, n) = H_k^{(2)}(x, n), \quad \mathbb{P}_{PX} \otimes \mathbb{P}_N \text{ a.s..}$$

Proof of theorem: Let $(P, \mathbb{P}_N, H) \in \mathcal{A}_P^{MON}(\mathbb{P}_N, \mathbb{P}_X)$. Define $h : n \in \mathbb{R}^d \to x(n) := H(\cdot, n)^{od}$, where $x(n)$ is the solution of the equation $x = H(x, n)$. The solution always exists and is unique. Observe now that h is a triangular and monotonic map thanks to the structure imposed on H and satisfies $h\#\mathbb{P}_{PN} = \mathbb{P}_{PX}$. As both $\mathbb{P}_{PN}$, and $\mathbb{P}_{PX}$ are a.c. w.r.t the Lebesgue measure, then $\mathbb{P}_{PN}$, as. there exists a unique increasing triangular T satisfying $T\#\mathbb{P}_{PN} = \mathbb{P}_{PX}$. Therefore and h is unique $\mathbb{P}_{PN}$, a.s. Let $H^{(1)}, H^{(2)} \in \mathcal{F}_d^{MON}$ such that $(P, \mathbb{P}_N, H^{(1)}) \in \mathcal{A}_P^{MON}(\mathbb{P}_N, \mathbb{P}_{PX})$ and $(P, \mathbb{P}_N, H^{(2)}) \in \mathcal{A}_P^{MON}(\mathbb{P}_N, \mathbb{P}_{PX})$. Because h is unique $\mathbb{P}_{PN}$ a.s.,

$$(H^{(1)}(\cdot, n))^{od} = (H^{(2)}(\cdot, n))^{od} = h(n), \quad \mathbb{P}_{PN} \text{ a.s.} \tag{29}$$

The result is deduced from the above lemma.

This result demonstrates that the partial recovery of monotonic fixed-point SCMs is feasible when the exogenous distribution is known. In fact, it is shown that, for this class of fixed-point SCMs, fixing the noise distribution PN is also necessary to obtain partial recovery.

**On the Existence and Non-Uniqueness of Monotonic Fixed-Point SCMs.**

Proposition: $P \in \Sigma_d$, and $\mathbb{P}_X \in \mathcal{P}(\mathbb{R}^d)$. Assume $\mathbb{P}_X$ is continuous. In addition, let us assume that there exists a jointly independent and continuous distribution $Q \in \mathcal{P}(\mathbb{R})^{\otimes d}$ with continuous density such that $\mathcal{A}_P^{MON}(Q, \mathbb{P}_X)$ is not empty. Then for any continuous distribution $\mathbb{P}_N \in \bar{\mathcal{P}}(\mathbb{R})^{\otimes d}$ with continuous density, $\mathcal{A}_P^{MON}(\mathbb{P}_N, \mathbb{P}_X)$ is a singleton $\mathbb{P}_{PX} \otimes \mathbb{P}_{PN}$ a.s. In particular, when $\mathbb{P}_N = \mathcal{N}(0_d, I_d)$, that is the standard (Multivariate) Gaussian distribution.

Proof: Let $Q$ such that $\mathcal{A}_P^{MON}(Q, \mathbb{P}_{PX})$ is not empty. As $Q$ is assumed to be continuous and jointly independent, it is obtained from the above theorem that $\mathbb{P}_{PX} \otimes Q$ a.s. there exists a unique $H \in \mathcal{F}_d^{MON}$

satisfying $p_1 \# \gamma(P, \mathbb{Q}, \Pi) = \mathbb{P}_{\boldsymbol{X}}$ . Let it be denoted by $H_{\mathbb{Q}}$. Now, because $\mathbb{P}_{P\boldsymbol{N}}$ is also continuous, there exists $\mathbb{P}_{P\boldsymbol{N}}$ a.s. a unique triangular and increasing map satisfying $h \# \mathbb{P}_{P\boldsymbol{N}} = \mathbb{Q}$ . In addition, because both $\mathbb{P}_{\boldsymbol{N}}$ and $\mathbb{Q}$ are jointly independent, h is in fact a diagonal and increasing map. Finally because both densities of $\mathbb{P}_{\boldsymbol{N}}$ and $\mathbb{Q}$ are continuous, then h can be chosen differentiable. Now let $H^*(x, n) := H_{\mathbb{Q}}(x, h(n))$ . Now because h is differentiable and due to its structure, $H^* \in \mathcal{F}_d^{MON}$ . Observe also that $p_1 \# \gamma(P, \mathbb{P}_{\boldsymbol{N}}, \Pi^*) = \mathbb{P}_{\boldsymbol{X}}$ , therefore $(P, \mathbb{P}_{\boldsymbol{N}}, \Pi^*) \in \mathcal{A}_P^{MON}(\mathbb{P}_{\boldsymbol{N}}, \mathbb{P}_{P\boldsymbol{X}})$ . Then applying the above theorem, the desired result is obtained.

The above Proposition has two important consequences: it shows (i) that as long as $\mathbb{P}_{\boldsymbol{X}}$ has been generated using a "monotonic" fixed-point SCM, then there exists a unique "monotonic" fixed-point SCM with standard Gaussian noise and the same topological ordering that can explain it. And (ii) it shows that if $\mathbb{P}_{\boldsymbol{X}}$ has been generated using a "monotonic" fixed-point SCM then, there exists infinite "monotonic" fixed-point SCMs with the same topological ordering that can explain it. Therefore for such a class of SCMs, it is sufficient and necessary to specify the exogenous distribution in order to obtain full recovery given the topological order.

The three following corollaries can be defined from the above result:

Corollary: Under the assumption of the above proposition, let $H_{\mathbb{Q}} \in \mathcal{F}_d^{MON}$ such that $S_{fp}(P, \mathbb{Q}, H_{\mathbb{Q}})$ generates $\mathbb{P}_{\boldsymbol{X}}$. Then for any $\mathbb{P}_{\boldsymbol{N}} \in \mathcal{P}(\mathbb{R})^{\otimes d}$ continuous, with continuous density, there exists a unique diagonal, monotonic and differentiable map h , $\mathbb{P}_{\boldsymbol{N}}$ a.s. such that $S_{fp}(P, \mathbb{P}_{\boldsymbol{N}}, (x, n) \to H_{\mathbb{Q}}(x, h(n)))$ , generates $\mathbb{P}_{\boldsymbol{X}}$ .

The above corollary characterizes the form of all monotonic fixed-point SCMs generating the same observational distribution given a reference one.

Corollary: Under the assumption of the above proposition, if $H_1, H_2 \in \mathcal{F}_d^{MON}$ such that there exists $\mathbb{P}_1$ and $\mathbb{P}_2$ both in $\mathcal{P}(\mathbb{R})^{\otimes d}$ continuous with continuous density and satisfying (P, $\mathbb{P}_1$ , $H_1$) and (P, $\mathbb{P}_2$ , $H_2$) are elements of

$$\mathcal{A}_P^{MON}(\mathbb{P}_{\boldsymbol{X}}) := \bigcup_{\mathbb{P} \in \mathcal{P}(R)^{\otimes d}} \mathcal{A}_P^{MON}(\mathbb{P}, \mathbb{P}_{\boldsymbol{X}})$$

Then there exists $P \# \mathbb{P}_1$ a.s. a diagonal and monotonic map $h : \mathbb{R}^d \to \mathbb{R}^d$ such that

$$H_1(x, n) = H_2(x, h(n)) \ \mathbb{P}_{\boldsymbol{X}} \otimes (P \# \mathbb{P}_1) \, a.s.$$

The above corollary shows the functional relationships between two monotonic fixed-point SCMs with the same TO that generate the same observational distribution.

Corollary: Under the assumption of the above proposition, for any continuous distribution $\mathbb{P}_{\boldsymbol{N}} \in \mathcal{P}(\mathbb{R})^{\otimes d}$ with continuous density, $\mathcal{A}_P^{MON}(\mathbb{P}_{\boldsymbol{N}}, \mathbb{P}_{\boldsymbol{X}})$ is a singleton $\mathbb{P}_{P\boldsymbol{X}} \otimes \mathbb{P}_{P\boldsymbol{N}}$ a.s., and all these fixed-point SCMs admit the exact same causal graphs. Finally, due to the fact that two generating fixed-point SCMs only differ from each others by a diagonal map on the exogenous variables, the causal graphs are therefore the same.

Building on the present formalism, the two key components of the causal generative model for learning fixed-point SCMs from observations are now introduced. More precisely, the present approach to amortize the learning of a zero-shot TO inference method, and the present attention-based parameterization of fixed-point SCMs on the causally ordered nodes to learn them, are described.

**Amortized Learning of TO**

The first component of the proposed causal generative model, that aims at inferring in a zero-shot manner the topological ordering of the nodes from observational data, is presented. The learning of a model, trained to sequentially predict the leaves of the graphs seen during training from their corresponding observations, is amortized.

**Training Setting**

Given $K \geq 1$ training datasets and their associated DAGs ( $(\mathcal{D}_{\text{tr}}^{(1)}, \mathcal{G}_{\text{tr}}^{(1)}), \ldots, (\mathcal{D}_{\text{tr}}^{(K)}, \mathcal{G}_{\text{tr}}^{(K)})$ ), obtained from K synthetically generated SCMs, the goal here is to optimize a learnable architecture $\mathcal{M}$ that given the observations $\mathcal{D}_{\text{tr}}^{(k)}$ can predict a valid TO of $\mathcal{G}_{\text{tr}}^{(k)}$ , and so for all k ∈ {1, ... ,K}.

**Architecture**

The exact same encoder **En** as the one proposed in (Lorch et al., 2022)is used in order to map a dataset, $\mathcal{D} \in \mathbb{R}^{n \times d}$ with n observational samples of d endogenous variables, to a latent representation of the nodes $\mathbf{En}(\mathcal{D}) \in \mathbb{R}^{d \times d_h}$ where $d_h$ is the latent dimension. As it is only required to predict whether a node is a leaf, a simple linear classifier f is used to predict the logits of each node, given by $\mathcal{M}(\mathcal{D}) := f(\mathbf{En}(\mathcal{D})) \in \mathbb{R}^d$.

**Training procedure**

To train the model $\mathcal{M}$ to infer TOs in a zero-shot manner, it is proposed to successively infer the leaves of the graphs seen during training in the topological order. To formalize the procedure, some operators are first introduced. The operator $\mathcal{R}_1$ is defined such that for any dataset $\mathcal{D} \in \mathbb{R}^{n \times d}$ and index $q \in \{1,...,d\}$, it returns the same dataset where the $q$-th column has been removed, denoted $\mathcal{R}_1(\mathcal{D}_k, q) \in \mathbb{R}^{n \times (d-1)}$. Similarly, the operator $\mathcal{R}_2$ is defined such that for graph $\mathcal{G} \in \{0, 1\}^{d \times d}$ and index $q \in \{1,...,d\}$, it returns the same graph where the q-th row and the q-th column have been removed, denoted $\mathcal{R}_2(\mathcal{G}, q) \in \{0, 1\}^{(d-1) \times (d-1)}$. The operator Lis also defined such that for any DAG $\mathcal{G} \in \{0, 1\}^{d \times d}$, it returns a binary vector of size d indicating its leaves $\mathcal{L}(\mathcal{G}) \in \{0, 1\}^d$, i.e. $\mathcal{L}(\mathcal{G})_k$ = 1 i.f.f $k$ is a leaf. For any binary vector $v \in \{0, 1\}^d$ and index $q \in \{1,..., d\}$, the following set is defined: $S_{v,q} := \{k \in \{1,...,d\}: v_k = 1\}$ and the operator $\mathcal{B}$ is defined such that it returns a sampled index $\mathcal{B}(v,q)$ from either the Dirac distribution $\delta_q$ if $v_q = 1$ or from the uniform distribution over $S_{v,q}$ otherwise. Finally, the binary loss between some logits $p := [p_1, \ldots, p_d] \in \mathbb{R}^d$ and a binary vector $y := [y_1,...,y_d] \in \{0, 1\}^d$ as

$$\mathbf{BN}(p, y) := -\sum_{k=1}^{d}(y_k \log(\sigma(p_k)) + (1 - y_k)\log(\sigma(-p_k))$$

is defined, where $\sigma$ $(x) := 1/(1 + \exp(-x))$ is the sigmoid function.

The training loss can now be presented to learn $\mathcal{M}$. Given any pair $(\mathcal{D}_{\text{tr}}, \mathcal{G}_{\text{tr}})$, the differentiable topological ordering error (d-TOE), defined in Algorithm 1, is introduced.

---

**Algorithm 1** d-TOE($\mathcal{M}, (\mathcal{D}_{tr}, \mathcal{G}_{tr})$)

---

1: **Input:** $\mathcal{M}, (\mathcal{D}_{tr}, \mathcal{G}_{tr})$
2: Initialize d-TOE $= 0$.
3: **for** $q = 1$ **to** $d$ **do**
4:     $p \leftarrow \mathcal{M}(\mathcal{D}_{tr}), \quad y \leftarrow \mathcal{L}(\mathcal{G}_{tr})$
5:     d-TOE $\leftarrow$ d-TOE $+ \mathbf{BN}(p, y)$
6:     $\hat{\ell} \leftarrow \operatorname{argmax}_i [p]_i, \quad \ell \leftarrow \mathcal{B}(y, \hat{\ell})$
7:     $\mathcal{D}_{tr} \leftarrow \mathcal{R}_1(\mathcal{D}_{tr}, \ell), \quad \mathcal{G}_{tr} \leftarrow \mathcal{R}_2(\mathcal{G}_{tr}, \ell)$
8: **end for**
9: Return d-TOE

---

$\mathcal{M}$ is learnt by minimizing

$$\sum_{k=1}^{K} \text{d-TOE}(\mathcal{M}, (\mathcal{D}_{tr}^{(k)}, \mathcal{G}_{tr}^{(k)})) \ .$$

Note that the model $\mathcal{M}$ as well as all the operators involved in Alg. 1 are fully parallelizable w.r.t the number of datasets, which allow the computation of d-TOE per batch of datasets.

While d-TOE requires d successive calls of $\mathcal{M}$, the memory and time complexities of the backward passes are still linear w.r.t these, since the gradient of either $\ell$ or $\hat{\ell}$ defined in line 6 of Alg. 1, are not considered.

**Sub-sampling of d-TOE**

In order to improve the scalability of the training procedure, d-TOE is computed only on a subset of indices randomly sampled. More formally, $1 \leq d_{max} \leq d$, is defined as the maximum number of indices to keep during training for computing the loss. Then for each training pair $(\mathcal{D}_{tr}, \mathcal{G}_{tr})$ (or batch of pairs), a set of $d_{max}$ indices are randomly sampled in $\{1,...,d\}$, and the d-TOE in line 5 of Alg. 1 is only updated if the current index q of the for loop is in the set. Note that if $d_{max} = 1$ is chosen, the backward computation is equivalent to the one where only a single call of $\mathcal{M}$ is performed.

**Zero-Shot TO Inference**

The zero-shot TO inference of the amortized model $\mathcal{M}$ is summarised in algorithm 4. Note that when $\mathcal{M}$ predicts a valid TO, Alg. 1 and 4 return the same TO.

The zero-shot TO inference obtained by the model $\mathcal{M}$ on a new test dataset $\mathcal{D}_{test} \in \mathbb{R}^{n_{test} \times d_{test}}$ is detailed below. Note that the TO inferred coincides exactly with the one obtained by Algorithm 1 when all the predicted leaves $\hat{\ell}$ defined in line 4 of Algorithm 4 (or line 6 of Algorithm 1) are true (sequential) leaves of the associated graph $\mathcal{G}_{test}$.

---

**Algorithm 4** TO Inference of $\mathcal{M}$

---

1: **Input:** $\mathcal{M}$, $\mathcal{D}_{\text{test}}$
2: Initialize TO = [ ].
3: **for** $k = 1$ **to** $d$ **do**
4: $\quad \hat{\ell} \leftarrow \text{argmax}_i [\mathcal{M}(\mathcal{D}_{\text{test}})]_i$, $\quad$ TO.append($\hat{\ell}$)
5: $\quad \mathcal{D}_{\text{test}} \leftarrow \mathcal{R}_1(\mathcal{D}_{\text{test}}, \hat{\ell})$
6: **end for**
7: Return TO

---

Improving TO Inference: It is assumed that $\mathcal{M}$ has been trained to predict TOs of various datasets of the form $\mathcal{D}_{\text{train}} \in \mathbb{R}^{n_{\text{train}} \times d_{\text{train}}}$, where $n_{\text{train}}$ and $d_{\text{train}}$ are the number of samples and the dimension respectively of each training dataset. Then the trained model can in principle take as input a test dataset $\mathcal{D}_{\text{test}} \in \mathbb{R}^{n_{\text{test}} \times d_{\text{test}}}$ of any size, that is with any $n_{\text{test}} \geq 1$ and $d_{\text{test}} \geq 1$ and return a permutation $\hat{P} \in \hat{\Sigma}_{d_{test}}$ of the variables that should (ideally) correspond to a TO of the nodes in $\mathcal{D}_{\text{test}}$. When at test time, there is access to more than $n_{\text{train}}$ samples, that is $n_{\text{test}} \geq n_{\text{train}}$, an assembling strategy is proposed to improve the prediction of the inferred TO. More precisely, leveraging the parallelism of the model as well as all the operators involved in Algorithm 4 w.r.t the number of datasets, it is proposed to build from $\mathcal{D}_{\text{test}}$, $B_{\text{test}}$ smaller datasets where $B_{\text{test}} := n_{\text{test}} \div n_{\text{train}}$ and $\div$ refers to the Euclidean division. Then the procedure presented in Algorithm 5 is proposed that assembles the predictions of each smaller datasets at each step to predict the most likely leaf. The operator vote introduced in line 5 of Algorithm 5, simply counts the number of apparition of each unique index that are present in the current list $[\hat{\ell}^{(1)},...,\hat{\ell}^{(B_{\text{test}})}]$ and returns one that has the maximum count.

---

**Algorithm 5** Improved TO Inference of $\mathcal{M}$

---

1: **Input:** $\mathcal{M}$, $\mathcal{D}_{\text{test}}^{(1)}, \ldots, \mathcal{D}_{\text{test}}^{(B_{\text{test}})}$
2: Initialize TO = [ ].
3: **for** $k = 1$ **to** $d$ **do**
4: $\quad [\hat{\ell}^{(1)}, \ldots, \hat{\ell}^{(B_{\text{test}})}] \leftarrow [\text{argmax}_{i_1}[\mathcal{M}(\mathcal{D}_{\text{test}}^{(1)})]_{i_1}, \ldots, \text{argmax}_{i_{B_{\text{test}}}}[\mathcal{M}(\mathcal{D}_{\text{test}}^{(B_{\text{test}})})]_{i_{B_{\text{test}}}}]$
5: $\quad \hat{\ell} \leftarrow \textbf{vote}([\hat{\ell}^{(1)}, \ldots, \hat{\ell}^{(B_{\text{test}})}])$
6: $\quad$ TO.append($\hat{\ell}$)
7: $\quad [\mathcal{D}_{\text{test}}^{(1)}, \ldots, \mathcal{D}_{\text{test}}^{(B_{\text{test}})}] \leftarrow [\mathcal{R}_1(\mathcal{D}_{\text{test}}^{(1)}, \hat{\ell}), \ldots, \mathcal{R}_1(\mathcal{D}_{\text{test}}^{(B_{\text{test}})}, \hat{\ell})]$
8: **end for**
9: Return TO

---

During a first stage of the causal generative model training, model $\mathcal{M}$ is trained to predict the topological order of variables in a given training a set $\mathcal{D}_{\text{tr}}$. The training set $\mathcal{D}_{\text{tr}}$, used to train the model $\mathcal{M}$, may comprise several datasets, each obtained from different DAGs, and concatenated to form training set $\mathcal{D}_{\text{tr}}$. A training set may be obtained from a DAG, $G_{\text{tr}}$, using a synthetically generated SCM.

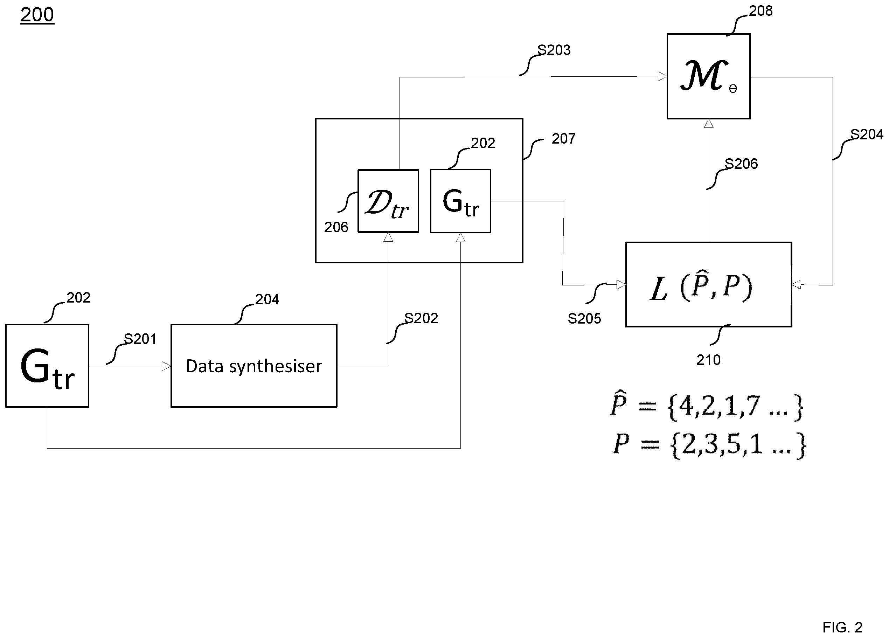

Figure 2 shows a block diagram illustrating Algorithm 1 for training model $\mathcal{M}$, which is one possible implementation of the initial training stage referred to above.

In step S201, known causal graph 202, $G_{\text{tr}}$, is input to a data synthesiser 204. The data synthesiser may be a synthetic SCM. In step S202, the data synthesiser 204 outputs a dataset 206, $\mathcal{D}_{\text{tr}}$, based on the causal graph 202. The training data 207 comprises the dataset 206 and the known causal graph 202. In step S203, the dataset 206 is input to model $\mathcal{M}$ (208). In step S204, the output of model 208, which is a predicted topological order $\hat{P}$ of the variables in dataset 206, is provided to a training loss function $L$ (210). In step S205, the known causal graph 202 is also input to the loss function 210. The loss function $L(\hat{P},P)$ 210 compares the predicted topological order $\hat{P}$ of variables as obtained from model 208 with the true topological order P of variables as found in the known causal graph 202. In step S206, gradients of the loss function 210 with respect to the parameters θ of model 208 are backpropagated through model 208, and the parameters θ are adjusted in a direction to minimise the loss function 210. In each subsequent iteration, the new model (after backpropagation) produces a new predicted output topological order for the dataset variables, which is in turn used to reevaluate the loss function 210, and compute and backpropagate the new gradients of the loss function. Once the model 208 is trained, it can be used in a 'zero-shot' manner to infer the causal order of variables in a new dataset not used in training.

In one example, model $\mathcal{M}$ is trained to sequentially predict the leaves of the graphs seen during training. In this example, a model loss is computed by comparing, for each training sample, the predicted last leaf i.e., the last node in the predicted topological order, to the true leaf of the causal graph. The last column corresponding to the correctly predicted leaf in the training dataset is removed, and the model is required to predict the new last leaf in the topological order for every training sample.

Note, although the model is trained using known causal graphs, once trained it is not predicting a full causal graph. Rather, it is only predicting a one-dimensional topological ordering of variables at inference. Conceptually, these variables correspond to nodes in a causal graph but the first stage does not attempt to extract the full causal graph.

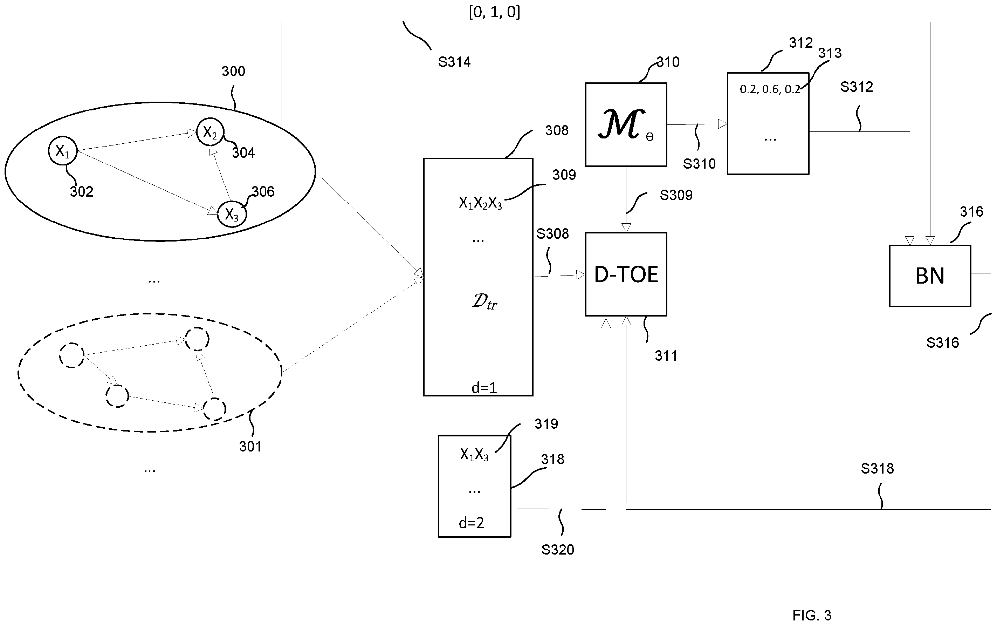

Figure 3 shows a block diagram illustrating further details of training of model 310, $\mathcal{M}$ , in one example embodiment, with improved computational efficiency. In this case, the model 310 predicts a probability that a variable is a final variable in the topological order (final variables correspond to leaf nodes of the causal graph) for every training sample. Multiple causal graphs, such as causal graphs 300 and 301 are used to generate dataset $\mathcal{D}_{\text{tr}}$ (308) in the form of a matrix. Each row in dataset 308 corresponds to a training sample and each column corresponds to a variable in an unknown causal graph used to generate the dataset. For example, causal graph 300, with variables $X_1$ (302), $X_2$ (304) and $X_3$ (306) might be used to generate one or more training samples for dataset 308. An example training sample is sample 309, with variables in order $X_1 X_2 X_3$ in the training dataset 308. In step S308, dataset 308 is input to a calling function 311, d-TOE. The calling function 311 calls model 310. In step S310, model 310 outputs a vector 312, p, of logits representative of the probability of the variables being the last node in the topological order for every training sample in dataset 308. For example, for the training sample 309, example logits 313 are (0.2, 0.6, 0.2), indicating that variable $X_2$ has the highest probability of being the last node in the topological order, as predicted by model 310. In step S312, the predicted logits for all the training samples are input to the loss function 316. In step S314, a ground truth topological ordering (true topological orders from the causal graph) is used to generate the dataset, are also fed to the loss function 316. The true topological order, y, is input to the loss function 316 as a binary vector of size d, indicating its leaves, where d is the number of variables in the sample and a value of 1 indicates that the corresponding variable is a leaf. For example, for the causal graph 300, the true topological order can be denoted by [0, 1, 0] because variable $X_2$ is the leaf of the causal graph 300. The loss 316 is computed by comparing, for each training sample, logits from model 310, to the binary vector denoting the true leaf of the causal graph used to generate that sample. For example, for sample 309, the predicted logits 313, (0.2, 0.6, 0.2) are compared to the binary vector [0, 1, 0]. The loss 316 may be a binary loss (BN) between the logits from model 310, to the binary vector denoting the true leaf of the causal graph used to generate that sample. In step S318 the gradients of the loss function are backpropagated through model 310, as in Figure 2. The column representing the leaf of the causal graph is removed to give dataset 318. For example, the sample 309 with variables $X_1 X_2 X_3$ is now sample 319 with variables $X_1 X_3$ in the new dataset 318. In step S320, dataset S318 is input to the calling function 311, d-TOE, which calls the model 310. In one training iteration, the calling function 311, d-TOE, requires d number of calls to the model 310.

## Fixed-Point SCM Learning

A second component of the causal generative model, that is a new transformer-based architecture enabling the parametrization of fixed-point SCMs is presented.

Let $\mathcal{S}_{\text{fp}}(P, \mathbb{P}_{\boldsymbol{N}}, H)$ be a fixed-point SCM generating $\gamma(P, \mathbb{P}_{\boldsymbol{N}}, H)$ with left marginal $\mathbb{P}_{\boldsymbol{X}}$ and let $\mathcal{D} := [[X^{(1)},...,X^{(n)}]^T$ be a dataset of n i.i.d. samples drawn from $\mathbb{P}_{\boldsymbol{X}}$ . The goal is to learn a generating fixed-point SCM of

$$\mathcal{A}_P(\mathbb{P}_{\boldsymbol{X}})$$ , given the samples $\mathcal{D}$ and the topological ordering $P$. To do so, $\mathcal{F}_d$ is parameterised using an attention-based autoencoder.

**Proposed Architecture**

To model $\mathcal{F}_d$ in a learnable fashion, an attention-based architecture that comprises four stages is designed: (i) a high dimensional causal embedding of the ordered samples that preserves the causal structure of the generating SCM, (ii) a causal attention mechanism to model ordered DAGs, (iii) a causal encoder that parameterizes $\mathcal{F}_d$ in a latent space, and (iv) a causal decoder that brings back the encoded samples to the original space while preserving the causal structure.

**Causal Embedding**

This layer maps the samples $$(\boldsymbol{X}, \boldsymbol{N}) \sim \gamma(P, \mathbb{P}_{\boldsymbol{N}}, H)$$ into a higher dimensional space without modifying the causal structure of the generating SCM $$S_{\mathrm{fp}}(P, \mathbb{P}_{\boldsymbol{N}}, H)$$ . To do so, the ordered samples are embedded by considering two diagonal maps $$E_1, E_2 : \mathbb{R}^d \rightarrow \mathbb{R}^{d \times D}$$ , with $D \gg 1$ the embedding dimension, defined as

$$E_i(w) := [w_1 * \theta_{i,1}, \ldots, w_d * \theta_{i,d}]^T + \mathbf{Pos} \in \mathbb{R}^{d \times D}$$

where $$w := [w_1, \ldots, w_d] \in \mathbb{R}^d$$ , $\theta_i := [\theta_{i,1}, \ldots, \theta_{i,d}]^T \in \mathbb{R}^{d \times D}$ with $\theta_{i,q} \in \mathbb{R}^D$ are some learnable parameters for $i \in \{1, 2\}$ and $\mathbf{Pos} \in \mathbb{R}^{d \times D}$ is a learnable matrix. Then the embedded samples are defined as $X_{emb} := E_1(PX)$ and $N_{emb} := E_2(PN)$. It is shown that the law of $(X_{emb}, N_{emb})$ is the solution of a latent fixed-point SCM with the same causal structure as the generating one $$S_{\mathrm{fp}}(P, \mathbb{P}_{\boldsymbol{N}}, H)$$ below.

Causal Embedding: The purpose of this layer is to embed into a higher dimensional space the samples without modifying the causal structure. Recall first that for $$(\boldsymbol{X}, \boldsymbol{N}) \sim \gamma(P, \mathbb{P}_{\boldsymbol{N}}, H)$$ ,

$$PX = H(PX, PN). \tag{13}$$

Two embedding functions for respectively X and N are introduced. Let $D \gg 1$, and for $k \in \{1, 2\}$, $$E_k : \mathbb{R}^d \rightarrow \mathbb{R}^{d \times D}$$ a differentiable function. It is assumed that for $k \in \{1, 2\}$, $E_k$ is bijective (on its image space) and its inverse is also differentiable. In the following Proposition, it is shown that a sufficient condition on these embedding functions to preserve the causal structure.

Proposition: $X_{emb} := E_1(PX)$, and $N_{emb} := E_2(PN)$ the embedded random variables where $$(\boldsymbol{X}, \boldsymbol{N}) \sim \gamma(P, \mathbb{P}_{\boldsymbol{N}}, H)$$ . If $E_1$ and $E_2$ satisfy for all $x, n \in \mathbb{R}^d$ , $i,j \in \{1,...,d\}$ and $k \in \{1,...,D\}$

$$[Jac\, E_1(x)]_{i,k,j} = 0, \quad if \quad i \neq j, \quad and$$
$$[Jac\, E_2(n)]_{i,k,j} = 0, \quad if \quad i \neq j, \tag{14}$$

Then there exists a differentiable function $$F : \mathbb{R}^{d \times D} \times \mathbb{R}^{d \times D} \rightarrow \mathbb{R}^{d \times D}$$ such that

$$X_{emb} = F(X_{emb}, N_{emb}) \tag{15}$$

and satisfying for all $i, j \in \{1,...,d\}$, $k, l \in \{1,...,D\}$:

$$[Jac_1 F(\cdot, \cdot)]_{i,k,j,l} = 0, \ if \ [Jac_1 H(\cdot, \cdot)]_{i,j} = 0$$
$$[Jac_2 F(\cdot, \cdot)]_{i,k,j,l} = 0, \ if \ [Jac_2 H(\cdot, \cdot)]_{i,j} = 0. \tag{16}$$

Proof. Let $x, n \in \mathbb{R}^d$ such that $Px = H(Px, Pn)$, it is now observed that:

$$E_1(Px) = E_1 \circ H(Px, Pn) = E_1 \circ H(E_1^{-1} \circ E_1(Px), E_2^{-1} \circ E_2(Pn))$$

It is now defined that for all

$( w, v \in \mathbb{R}^{d \times D}, F(w, v) := E_1 \circ H(E_1^{-1}(w), E_2^{-1}(v))$ ), it is now observed that:

$$E_1(Px) = F(E_1(Px), E_1(Pn))$$

Therefore, for $(X, N) \sim \gamma(P, \mathbb{P}_N, H)$,
$(X_{emb} := E_1(PX), N_{emb} := PN)$ is solving the following fixed problem:

$$X_{emb} = F(X_{emb}, N_{emb})$$

It is now shown that this fixed-point problem defines a fixed-point SCM that satisfies the causal structure of the generating SCM. Now by definition of F, it is obtained that for all $x, n \in E_1(\mathbb{R}^d) \times E_2(\mathbb{R}^d)$.

$$Jac_1(F)(x, n) = Jac(E_1)(H(E_1^{-1}(x), E_2^{-1}(n)))Jac_1(H)(E_1^{-1}(x), E_2^{-1}(n))Jac(E_1^{-1})(x)$$

$$Jac_2(F)(x, n) = Jac(E_1)(H(E_1^{-1}(x), E_2^{-1}(n)))Jac_2(H)(E_1^{-1}(x), E_2^{-1}(n))Jac(E_2^{-1})(n)$$

where for a function G and a point z, the Jacobian of G evaluated in z is denoted by Jac(G)(z). Then, under condition (14), as both $E_1$, $E_2$ and their restricted inverses $E_1^{-1}, E_2^{-1}$ are diagonal maps, equation (16) is recovered.

Therefore, as soon as (14) is satisfied, the law of $(X_{emb}, N_{emb})$ becomes the solution of a new fixed-point SCM induced by F and (16) guarantees that its causal structure is the same as H. To satisfy (14), the simple embedding of the form:

$$E_i(w) := [w_1 * \theta_{i,1}, \ldots, w_d * \theta_{i,d}] \in \mathbb{R}^{d \times D}$$

is proposed where

$w := [w_1, \ldots, w_d] \in \mathbb{R}^d, \theta_i := [\theta_{i,1}, \ldots, \theta_{i,d}]^T \in \mathbb{R}^{d \times D}$ with $\theta_{i,q} \in \mathbb{R}^D$ are learnable parameters. The fact that the topological ordering is known to add a common positional encoding to these embedding is leveraged. More formally, the following is defined:

$$E_{i,\text{pos}}(w) := E_{\theta_i}(w) + \mathbf{Pos} \in \mathbb{R}^{d \times D} \qquad\qquad (17)$$

where $\mathbf{Pos} \in \mathbb{R}^{d \times D}$ is a learnable parameter that encodes the position

**Causal attention**

The new causal attention mechanism in order to model causal relationships is introduced.

In classical attention, given a key, and a query, denoted respectively $K, Q \in \mathbb{R}^{d \times D}$, where d is the sequence length, and D is the hidden dimension, the attention matrix is defined as:

$$A(Q, K) := \text{softmax}(QK^T / \sqrt{D}),$$

$M \in \mathbb{R}^{d \times d}$, where for

$$[\text{softmax}(M)]_{i,j} := \frac{\exp(M_{i,j})}{\sum_k \exp(M_{i,k})}.$$

In order to obtain a triangular mapping, it is common to add a causal masking to the attention weights. Generally the latter is obtained by defining a mask $M \in \{0, +\infty\}$ satisfying for all $i \le j$, $M_{i,j} = 0$ and for all $j > i$, $M_{i,j} = \infty$, and considering the following attention matrix:

$$A_M(Q, K) := \text{softmax}((QK^T - M) / \sqrt{D}). \qquad\qquad (18)$$

The main issue with the standard attention as defined in (18) is that the softmax operator forces all the rows to sum to 1, which means that all the nodes are forced to have at least one parent. In order to alleviate this issue and model correctly the root nodes, it is proposed to relax the definition of the attention layer, viewed as the solution of a specific (partial) optimal transport problem, in order to remove the constraints on the rows of the attention matrix. For that purpose, the following is denoted:

$\Pi_{\mathbf{1}_d} := \{W \in \mathbb{R}_+^{d \times d} : W\mathbf{1}_d = \mathbf{1}_d\}$ and $\Pi_{\mathbf{1}_d}^{\le} := \{W \in \mathbb{R}_+^{d \times d} : W\mathbf{1}_d \le \mathbf{1}_d\}$, where $\mathbf{1}_d = [1, \dots, 1] \in \mathbb{R}^d$. It is shown that $A_M$ the solution of a specific optimal transport problem.

Proposition: $A_M$ defined in (18) is the solution of the following (partial) and entropic optimal transport problem:

$$\underset{W \in \Pi_{\mathbf{1}_d}}{\text{argmin}} \langle W, C_M(Q, K) \rangle - \sqrt{D} H(W) \qquad\qquad (19)$$

where $H(W) := -\sum_{ij} W_{i,j} (\log(W_{i,j}) - 1)$ is the generalized entropy and $C_M(Q,K) := -(QK^T - M)$.

Proof. This result is a direct consequence of the first order condition. Indeed at optimality, there exists $\lambda \in \mathbb{R}^d$ such that

$$C_M(Q, K) + \sqrt{D} \log(W) + \lambda \mathbf{1}_d = 0$$

From which follows that $W = \exp((-C_M(Q, K) - \lambda \mathbf{1}_d) / \sqrt{D})$ and, as W must satisfy the constraint, the result follows.

Another masking $M \in \mathbb{R}^{d \times d}$ that is the matrix satisfying for all $i < j$, $[M]_{i,j} = 0$ and for $j \ge i$, $[M]_{i,j} = \infty$. is considered. Note that the only difference with the traditional masking, is that here the diagonal is also masked in order to remove the edges from a node to itself. The new causal attention mechanism is now presented.

Definition (Causal Attention): For $Q, K \in \mathbb{R}^{d \times D}$, the causal attention matrix $CA_M(Q,K)$ is defined as the solution of the following relaxed, (partial) and entropic optimal transport problem:

$$\underset{W \in \Pi_{1_d}^{\leq}}{\operatorname{argmin}} \langle W, C_M(Q,K) \rangle - \sqrt{D} H(W). \tag{20}$$

where $C_M(Q,K) := -(QK^T - M_1)$.

It happens that the solution of (20) is unique and can be derived in closed form:

$$CA_M(Q,K) = \frac{\exp((QK^T - M)/\sqrt{D})}{\mathcal{V}(\exp((QK^T - M)/\sqrt{D})1_d)}$$

where for $v := [v_1, \ldots, v_d] \in \mathbb{R}_+^d$ and $i \in \{1,\ldots,d\}$,

$$[\mathcal{V}(v)]_i = \begin{cases} v_i, & \text{if } v_i \geq 1 \\ 1, & \text{otherwise.} \end{cases}$$

By relaxing the constraint of the optimal transport problem, a new attention mechanism is obtained that handles the existence of roots in a causal graph, which cannot be captured by the standard attention.

It is proposed to encode the causal graph of the ordered nodes with an attention matrix. Before doing so, the definition of the standard attention is described. Given a key, and a query, denoted respectively $K, Q \in \mathbb{R}^{d \times d_{\text{head}}}$ with $d_{\text{head}}$ the dimension of a single head, and a (potential) mask, the attention matrix is defined as

$$A_M(Q,K) := \operatorname{softmax}((QK^T - M)/\sqrt{D})$$

where for $W \in \mathbb{R}^{d \times d}$, $[\operatorname{softmax}(W)]_{i,j} := \exp(W_{i,j})/\sum_k \exp(W_{i,k})$. By viewing $Q$ and $K$ as two sequences of d nodes living in $\mathbb{R}^{d_{\text{head}}}$, the attention matrix can be interpreted as a continuous graph explaining the relationships between the nodes. However, the softmax forces all the rows to sum to 1, thus preventing the use of attention to model DAGs, since each node would have at least one parent. This constraint is relaxed in the present method.

For $Q, K \in \mathbb{R}^{d \times d_{\text{head}}}$, and $M \in \{0,+\infty\}^{d \times d}$, the causal attention matrix $CA_M(Q,K)$ is defined as

$$CA_M(Q,K) := \frac{\exp((QK^T - M)/\sqrt{D})}{\mathcal{V}(\exp((QK^T - M)/\sqrt{D})1_d)}$$

where for $v := [v_1, \ldots, v_d] \in \mathbb{R}_+^d$ and $i \in \{1,\ldots,d\}$, $[v(v)]_i := v_i$ if $v_i \geq 1$ and $[v(v')]_i := 1$ otherwise.

Now the rows of $CA_M(Q, K)$ can sum to any values between $[0,1]$, and therefore can be used to model any DAGs. In the following, a specific masking is considered, that is $M_{i,j} := 0$ if $i < j$ and $M_{i,j} := +\infty$ otherwise, to encode on $\operatorname{Jac}_1 H$ in the causal attention the condition that $H : \mathbb{R}^d \times \mathbb{R}^d \to \mathbb{R}^d$ is differentiable, and satisfies for all

$$x, n \in \mathbb{R}^d \quad \begin{aligned} [\operatorname{Jac}_1 H(x,n)]_{i,j} &= 0, \quad \text{if} \quad j \geq i, \quad \text{and} \\ [\operatorname{Jac}_2 H(x,n)]_{i,j} &= 0, \quad \text{if} \quad i \neq j, \end{aligned} \tag{2}$$

(2)where $\operatorname{Jac}_1 H$ and $\operatorname{Jac}_2 H$ are the Jacobians of H w.r.t the first and second variables, i.e. $x$ and $n$ respectively.

It is worth noting that the proposed causal attention is a strict relaxation of the standard attention viewed as the solution of a partial and entropic optimal transport problem.

The model uses multi-head attention, but a single head has been presented for better readability.

**Causal encoder**

The main building block of the proposed architecture is now presented. Here, it is aimed to at parametrize the function F introduced in (15). To do so, the following are considered: $(X_{\mathrm{emb}}, N_{\mathrm{emb}}) \in \mathbb{R}^{d \times D} \times \mathbb{R}^{d \times D}$ are some inputs, $W_Q, W_K, W_V \in \mathbb{R}^{D \times D}$ are three learnable parameters and the following is defined:

$$Q(N_{\mathrm{emb}}) := N_{\mathrm{emb}} W_Q, \ K(X_{\mathrm{emb}}) := X_{\mathrm{emb}} W_K,$$

$$V(X_{\mathrm{emb}}) := X_{\mathrm{emb}} W_V.$$

$h : \mathbb{R}^D \to \mathbb{R}^D$ denotes a parametric function. The proposed encoder layer $C$ i is defined as the following operator:

$$\mathcal{C}(X_{\mathrm{emb}}, N_{\mathrm{emb}}) := \\ h(\mathrm{CA}_M(Q(N_{\mathrm{emb}}), K(X_{\mathrm{emb}}))V(X_{\mathrm{emb}}) + N_{\mathrm{emb}}) \tag{21}$$

where for

$W := [W_1, \ldots, W_d]^T \in \mathbb{R}^{d \times D}$ with $W_i \in \mathbb{R}^D$, $h(W) := [h(W_1), \ldots, h(W_d)]^T \in \mathbb{R}^{d \times D}$ is defined. The dependence of $C_i$ with the parameters is omitted to simplify the notation. As in a classical transformer, h is considered to be the composition of a layer norm operator (LN) and a multi-layer perceptron (MLP):

$$h(x) = \mathrm{LN} \circ (\mathrm{I}_D + \mathrm{MLP}) \circ \mathrm{LN}(x).$$

It is now shown that the proposed layer satisfies the constraints of a fixed-point SCM.

Proposition: Let C as defined in (21). Then for all $x, n \in \mathbb{R}^{d \times D}$, $i,j \in \{1,...,d\}$ and $k, l \in \{1,..., D\}$,

$$[Jac_1 \mathcal{C}(x, n)]_{i,k,j,l} = 0, \quad if \quad j \geq i, \quad and \\ [Jac_2 \mathcal{C}(x, n)]_{i,k,j,l} = 0, \quad if \quad i \neq j. \tag{22}$$

Proof. First observe that h is applied coordinate-wise, therefore when viewed as an operator from $\mathbb{R}^{d \times D} \to \mathbb{R}^{d \times D}$, its Jacobian is diagonal w.r.t to the first dimension. Now for $x, n \in \mathbb{R}^{d \times D}$, the following is defined:

$$g(x, n) := \mathrm{CA}_M(Q(n), K(x))V(x) + n$$

and it is observed that the i-th row of $\mathrm{CA}_M(Q(n), K(x))$ only depends on the i-th row $Q(n)$ and the i - 1 first rows of $K(x)$. In addition, because $\mathrm{CA}_M(Q(n), K(x))$ is strictly lower-triangular, $\mathrm{CA}_M(Q(n), K(x))V(x)$ has exactly the same dependencies. Then it is deduced directly that for all $x, n \in \mathbb{R}^{d \times D}$, $i, j \in \{1,...,d\}$ and $k, l \in \{1,...,D\}$,

$$[Jac_1 g(x, n)]_{i,k,j,l} = 0, \quad if \quad j \geq i,$$

and

$$[Jac_2 g(x, n)]_{i,k,j,l} = 0, \quad if \quad i \neq j.$$

from which the result follows.

Therefore the proposed causal encoder layer can parameterize a whole family of fixed-point SCM in a latent space where the nodes are represented by vector of dimension D. In order to further increase its complexity, it is proposed now to compose them. Starting with an embedded sample $X_{\text{emb}} := E_{1,\text{Pos}}(PX) \in \mathbb{R}^{d \times D}$ and an embedding of noise, that is $N_{\text{emb}}^{(0)} := E_{2,\text{Pos}}(PN)$, for $k \in \{1, ..., L - 1\}$:

$$N_{\text{emb}}^{(k+1)} := \mathcal{C}(X_{\text{emb}}, N_{\text{emb}}^{(k)}).$$

It is now shown that this composition is still a valid fixed-point SCM.

Proposition: Let C as defined in (21), $x, n \in \mathbb{R}^{d \times D}$ and let $C_L(x, n) := C(x, \cdot)^{oL}(n)$ be defined. Then for all $i, j \in \{1,...,d\}$ and $k,l \in \{1,...,D\}$:

$$[Jac_1 \mathcal{C}_L(x, n)]_{i,k,j,l} = 0, \quad if \quad j \geq i,$$

and

$$[Jac_2 \mathcal{C}_L(x, n)]_{i,k,j,l} = 0, \quad if \quad i \neq j.$$

Proof. This results is a direct consequence of the previous proposition. Indeed because $Jac_2[C(x, n)]_{i,k,j,l} = 0$, if $i \neq j$, then composing w.r.t the second variable does not $\mathcal{C} : \mathbb{R}^{d \times D} \times \mathbb{R}^{d \times D} \to \mathbb{R}^{d \times D}$ a modify the structure of the Jacobian. More formally let function satisfying (22), then it can be shown by recursion that (22) still holds when composing them w.r.t the second variable. Indeed, assuming it is the case after k composition then for $x, n \in \mathbb{R}^{d \times D} \times \mathbb{R}^{d \times D}$:

$$\mathcal{C}_{k+1}(x, n) = \mathcal{C}(x, \mathcal{C}_k(x, n))$$

Then taking the Jacobian the following is obtained:

$$Jac_1(\mathcal{C}_{k+1})(x, n) = Jac_1(\mathcal{C})(x, \mathcal{C}_k(x, n)) + Jac_2(\mathcal{C})(x, \mathcal{C}_k(x, n)) Jac_1(\mathcal{C}_k)(x, n)$$

however as $Jac_1(C)$ and $Jac_1(C_k)$ have the same structure, and $Jac_2(C)$ are diagonals. Then the result follows.

To encode the embedded samples, a transformer-like encoder (Vaswani, A., Shazeer, N., Parmar, N., Uszkoreit, J., Jones, L., Gomez, A. N., Kaiser, L., and Polosukhin, I. Attention is all you need. Advances in neural information processing systems, 30, 2017) is applied using the present causal attention. More formally, given the embedded samples, $(X_{\text{emb}}, N_{\text{emb}})$, the following encoder layer is considered, defined as:

$$\mathcal{C}(X_{\text{emb}}, N_{\text{emb}}) :=$$
$$h(\text{CA}_M(N_{\text{emb}}W_Q, X_{\text{emb}}W_K)X_{\text{emb}}W_V + N_{\text{emb}})$$

where $W_Q, W_K, W_V \in \mathbb{R}^{D \times D}$ are learnable parameters, $h(x) := \text{LN} \circ (I_D + \text{MLP}) \circ \text{LN}(x)$ applied point-wise on each row, and LN and MLP denote a layer norm operator and a multi-layer perceptron respectively. Then starting from $N_{\text{emb}}^{(0)} := N_{\text{emb}}$, the following is computed for $k \in \{0,..., L - 1\}$:

$$N_{\text{emb}}^{(k+1)} := \mathcal{C}(X_{\text{emb}}, N_{\text{emb}}^{(k)}),$$

where for each k a new encoder layer C is instantiated. The causal decoder is then defined as $C_L : (x,n) \to C(x, \cdot)^{oL}(n)$ it is shown that it defines a valid fixed-point SCM in the latent space.

**Causal Decoder.**

The causal decoder that aims at bringing back the output of the causal encoder into the original space $\mathbb{R}^d$ without affecting the causal structure is now presented. For that purpose a function $\mathcal{J} : \mathbb{R}^{d \times D} \to \mathbb{R}^d$ is designed that conserves the structure of $C_L$. More formally $\mathcal{J}$ has to satisfy the following constraints for $i, j \in \{1,...,d\}$ and $l \in \{1,...,D\}$:

$$[Jac_1 \mathcal{J} \circ \mathcal{C}_L (\cdot, \cdot)]_{i,j,l} = 0, \text{ if } \forall k, q, \ [Jac_1 \mathcal{C}_L (\cdot, \cdot)]_{i,k,j,q} = 0$$
$$[Jac_2 \mathcal{J} \circ \mathcal{C}_L (\cdot, \cdot)]_{i,j,l} = 0, \text{ if } \forall k, q, \ [Jac_2 \mathcal{C}_L (\cdot, \cdot)]_{i,k,j,q} = 0. \tag{23}$$

A sufficient condition to satisfy the above conditions is now presented:

Proposition: If $\mathcal{J}$ satisfies for all $x \in \mathbb{R}^{d \times D}$, $i,j \in \{1,...,d\}$, and $l \in \{1,...,D\}$:

$$[Jac\mathcal{J}(x)]_{i,j,l} = 0, \ if \ i \neq j$$

then $\mathcal{J}$ satisfies (23) and preserves the structure of $C_L$.

Proof. This simply follows the composition of Jacobians. Indeed, under the assumption, it is obtained for all $x, n \in \mathbb{R}^{d \times D}$,

$$Jac_1 \mathcal{J} \circ \mathcal{C}_L(x, n) = Jac(\mathcal{J})(\mathcal{C}_L(x, n)) Jac_1(\mathcal{C}_L)(x, n)$$

$$Jac_2 \mathcal{J} \circ \mathcal{C}_L(x, n) = Jac(\mathcal{J})(\mathcal{C}_L(x, n)) Jac_2(\mathcal{C}_L)(x, n)$$

but as $\mathcal{J}$ is diagonal, the result follows.

In order to satisfy the condition obtained in the above proposition, a simple decoder layer is proposed defined for $x := [x_1, \ldots, x_d]^T \in \mathbb{R}^{d \times D}$ as:

$$\mathcal{J}(x) := [\langle x_1, w_1 \rangle, \ldots, \langle x_d, w_d \rangle] \in \mathbb{R}^d \tag{24}$$

where $w_i \in \mathbb{R}^D$ are learnable parameters.

Final Parameterization. The final proposed architecture $\mathcal{T}$ obtained is defined for $x, n \in \mathbb{R}^d$ as:

$$\mathcal{T}(x, n) := \mathcal{J} \circ \mathcal{C}_L(E_{1,\mathbf{Pos}}(x), E_{2,\mathbf{Pos}}(n)) \in \mathbb{R}^d.$$

Using the proposed parameterization for $\mathcal{D}$, $C_L$, and $E_i$ one obtains the following corollary showing that $\mathcal{T}$ satisfies the structural constraints.

Corollary: For all: $x, n \in \mathbb{R}^d$ and $i,j \in \{1,...,d\}$,

$$[Jac_1 \mathcal{T}(x, n)]_{i,j} = 0, \quad if \quad j \geq i,$$

*and*

$$[Jac_2 \mathcal{T}(x, n)]_{i,j} = 0, \quad if \quad i \neq j,$$

therefore $\mathcal{T} \in \mathcal{F}_d$.

To summarize, the present architecture allows to embed into a higher dimensional space an SCM while conserving its structure using the causal embedding, parameterize the set of valid SCM in the latent space using the causal encoder, and then bring back the encoded SCM into the original space without modifying its structure.

To decode the samples without affecting the causal structure, the following is considered: a simple parametric function $\mathcal{J}$ defined for $x := [x_1, \ldots, x_d]^T \in \mathbb{R}^{d \times D}$ as $\mathcal{J}(x) := [\langle x_1, w_1 \rangle, \ldots, \langle x_d, w_d \rangle]$, where, $\langle \cdot, \cdot \rangle$ denotes the inner product, and $w_i \in \mathbb{R}^D$ are learnable parameters. It is shown that $\mathcal{J}$ allows to preserve the causal structure of the encoded samples. Finally, the final architecture $\mathcal{T}$ is defined for $x, n \in \mathbb{R}^d$ as:

$$\mathcal{T}(x, n) := \mathcal{J} \circ \mathcal{C}_L(E_1(x), E_2(n)) \in \mathbb{R}^d, \qquad (5)$$

which is guaranteed to be in $\mathcal{F}_d$ and to preserve the causal structure of SCMs during embedding and decoding phases.

**Training and Generation**

Only a restricted case of ANM is considered, and models of the form $\mathcal{T}_{\text{ANM}}(x, n) := \mathcal{T}(x, 0_d) + n$ are considered. The goal is then to learn $\mathcal{T}_{\text{ANM}}$ such that a generating fixed-point SCM of $\mathbb{P}_X$ can be recovered given n samples $X_i$ and the topological ordering P. To do so, it is proposed to minimize the mean squared error (MSE), that is:

$$\mathbb{E}_{x \sim \mathbb{P}_X} \| x - P^T \mathcal{T}_{\text{ANM}}(Px, 0_d) \|_2^2. \qquad (25)$$

It is shown that if the generating fixed-point SCM is an ANM, then it can be recovered uniquely by minimizing (25).

Proposition: Let $\mathbb{P}_X \in \mathcal{P}_2(\mathbb{R}^d)$ and $P \in \Sigma_d$. Assuming that there exists $(P, \mathbb{P}, H) \in \mathcal{A}_P^{ANM}(\mathbb{P}_X)$ such that $\mathbb{P} \in \mathcal{P}_2(\mathbb{R}^d)$. Let $\mathcal{H}_d := \{h : \mathbb{R}^d \to \mathbb{R}^d : h$ *is differentiable and* $[Jac\,h(x)]_{i,j} = 0$ *if* $j \geq i\}$. Then the problem

$$\min_{h \in \mathcal{H}_d} \mathbb{E}_{x \sim \mathbb{P}_X} \| x - P^T h(Px) \|_2^2$$

admits $\mathbb{P}_{PX}$ a.s. a unique solution $h^*$ and by denoting

$\mathbb{P} := P^T \circ (I_d - h^*) \# \mathbb{P}_{PX}$ *and* $H(x, n) = h^*(x) + n$, one obtains $(P, \mathbb{P}, H)$ *is* $\mathbb{P}_{PX}$ a.s. the unique element of $\mathcal{A}_P^{ANM}(\mathbb{P}_X)$.

Proof. This results follows directly from the resolution of the MSE minimization. It can be assumed without loss of generality that $P = I_d$. Then for all $i \in \{1, \ldots, d\}$, by conditioning on the previous $X_{<i} := [X_1, \ldots, X_{i-1}]$ and taking the expectation, a simple calculation gives that the optimal solution is unique $\mathbb{P}_X$ a.s. and satisfy for all $i$ $h_i(x) := E(X_i | X_{<i} = x_{<i})$ where $x_{<i} := [x_1, \ldots, x_{i-1}]$ and $h := [h_1, \ldots, h_d]$. Now because $\mathbb{P}_X$ is generated by a fixed-point SCM with the same topological ordering, and thanks to a previous proposition, it can be deduced directly that $H(x, n) = h(x) + n$. Then, the exogenous distribution follows directly.

By construction, $x \to \mathcal{T}_{\text{ANM}}(x, 0_d)$ is an element of $\mathcal{H}_d$ and therefore can be used to recover a causal ANM. In practice one would rather minimize $\mathbb{E}_{x \sim \hat{\mathbb{P}}_X} \| Px - \mathcal{T}(Px, 0_d) \|_2^2$ where $\hat{\mathbb{P}}_X := 1/n \sum_{i=1}^n \delta_{X_i}$ is the empirical distribution.

Once $\mathcal{T}_{\text{ANM}}$ is trained by minimizing (25), the exogenous distribution of the model can be defined as

$$\mathbb{P}_{\boldsymbol{N}} := P^T \circ (\mathrm{I}_d - \mathcal{T}_{\mathrm{ANM}}(\cdot, 0_d)) \# \mathbb{P}_{P\boldsymbol{X}}$$ . However only samples from $\mathbb{P}_{\boldsymbol{X}}$ are accessible, only the associated samples of $\mathbb{P}_{\boldsymbol{N}}$ can be generated. In order to build a complete generative model, it is required to be able to sample according to $\mathbb{P}_{\boldsymbol{N}}$. To do so, it is proposed to estimate simple functions using the associated samples of the exogenous distribution, that are the $PN_i := PX_i - \mathcal{T}(PX_i, 0_d)$. First recall that $\mathbb{P}_{\boldsymbol{N}}$ is a jointly independent distribution and $\mathbb{P}_{\boldsymbol{N}} = \otimes_{i=1}^d \mathbb{P}_{N_i}$. is denoted. In order to learn a generating process to obtain new samples from this distribution, it is proposed to solve these following 1-d problems:

$$\text{find } g_i : \mathbb{R} \to \mathbb{R} : g_i \# \mathbb{U} = \mathbb{P}_{N_i} \, \forall \, i \in \{1, \ldots, d\},$$

where $\mathbb{U}$ is the 1-d uniform distribution on [0,1]. To do it is proposed to minimize optimal transport distance as defined in (Villani, C. Optimal transport: old and new, volume 338. Springer, 2009) and it is shown that this allows the recovery of the exogenous distribution.

Proposition: Let and assume it is continuous. Then

$$\min_{g_k : \mathbb{R} \to \mathbb{R}} OT(g_k \# \mathbb{U}, \mathbb{P}_{N_k}), \quad \forall \, k \in \{1, \ldots, d\}, \tag{26}$$

$x$ $x \in \mathbb{R}^d$, $g(x) := [g_1(x_1), \ldots, g_d(x_d)]$, admits a solution and by defining for

$$g \# \otimes_{i=1}^d \mathbb{U} = \mathbb{P}_{\boldsymbol{N}}.$$

Proof. The existence of the solution follows directly from (Villani, 2009) thanks to the continuity of both the source and the target probability measures. Then using the independence of $\mathbb{P}_{\boldsymbol{N}}$, the second equality follows directly.

The resolution (26) is a well-studied problem and can be solved for example by estimating quantile functions of each $\mathbb{P}_{N_i}$. Then once the $g_i$ are estimated, they can be used to obtain new sample of $\mathbb{P}_{\boldsymbol{N}}$ by drawing d i.i.d samples from $\mathbb{U}$.

While the proposed architecture can parameterize complex functions in $\mathcal{F}_d$, a restricted setting is considered. More formally, the learning of additive noise models of the form $\mathcal{T}_{\mathrm{ANM}}(x, n) := \mathcal{T}(x, 0) + n$ where $\mathcal{T}$ is defined as in (5) are considered.

**Training**

To train such a model, it is proposed to minimize the mean squared error (MSE), that is:

$$\mathbb{E}_{\boldsymbol{X} \sim \hat{\mathbb{P}}_{\boldsymbol{X}}} \| X - P^T \mathcal{T}_{\mathrm{ANM}}(PX, 0_d) \|_2^2. \tag{6}$$

where $\hat{\mathbb{P}}_{\boldsymbol{X}} := 1/n \sum_{i=1}^n \delta_{\boldsymbol{X}^{(i)}}$ is the empirical distribution of the observations and P is the TO of the generating SCM $\mathcal{S}_{\mathrm{fp}}(P, \mathbb{P}_{\boldsymbol{N}}, H)$. It is shown in above that in the limit of infinite samples, MSE minimization recovers uniquely the generating function $H$ if $H \in \mathcal{F}_d^{\mathrm{ANM}}$.

**Generative Modeling**

Once $\mathcal{T}_{\text{ANM}}$ is trained, simple 1-dimensional functions are estimated to generate new samples from the learned SCM. To do so, the marginals of $\mathbb{P}_{\boldsymbol{N}}$, denoted $\hat{\mathbb{P}}_{N_k}$ for $k \in \{1,...,d\}$, are estimated using the predicted noises $\tilde{N}^{(i)} := X^{(i)}$ - $P^T \mathcal{T}_{\text{ANM}} (PX^{(i)}, 0_d)$. Then the following 1-d problems are solved:

$$\min_{g_k : \mathbb{R} \to \mathbb{R}} \text{OT}(g_k \# \hat{\mathbb{U}}, \hat{\mathbb{P}}_{N_k}), \quad \forall k \in \{1, \dots, d\}, \quad (7)$$

where OT is the optimal transport distance (Villani, 2009) and $\hat{\mathbb{U}}$ is the empirical distribution of the uniform law on [0, 1]. These problems can be efficiently solved by estimating the quantile functions of each $\mathbb{P}_{N_k}$ (Peyré, G., Cuturi, M., et al. Computational optimal transport: With applications to data science. Foundations and Trends® in Machine Learning, 11(5-6):355-607, 2019). The generative process is summarised in Alg. 2 and it is shown in above that in the limit of infinite samples, this procedure generates samples of $\gamma(P, \mathbb{P}_{\boldsymbol{N}}, H)$ if $H \in \mathcal{F}_d^{ANM}$ if $H \in \mathcal{F}_d^{ANM}$.

---

**Algorithm 2** Generative Procedure of $\mathcal{T}_{\text{ANM}}$

---

**Input:** $\mathcal{T}_{\text{ANM}}, P, g_1, \dots, g_k,$
Initialize $\tilde{X} = 0_d$, and $U_1 \dots, U_k$ $d$ i.i.d from $\mathbb{U}$
$\tilde{N}_k \leftarrow g_k(U_k), \forall k \in \{1, \dots, d\}, \quad \tilde{N} \leftarrow [\tilde{N}_1, \dots, \tilde{N}_d]$
$\tilde{X} \leftarrow \mathcal{T}_{\text{ANM}}(\cdot, P\tilde{N})^{\circ d}(\tilde{X})$
$\tilde{X} \leftarrow P^T \tilde{X}$
Return $(\tilde{X}, \tilde{N})$

---

Causal Inference. Once the model is trained by minimizing (25), that is $\mathcal{T}_{\text{ANM}}$ is learned, one has now access to the full SCM and can perform any causal operations. More precisely, for any $\mathcal{T} \in \mathcal{F}_d^{\text{ANM}}$, $\text{NS}(\mathcal{T}) : \mathbb{R}^d \to \mathbb{R}^d$ can be defined that transforms a noise sample to the associated data sample and defined as

$$\text{NS}(\mathcal{T})(n) = x_{\mathcal{T}}(n) = \mathcal{T}(\cdot, n)^{\circ d}$$

and $\text{SN}(\mathcal{T}) : \mathbb{R}^d \to \mathbb{R}^d$ that transforms a data sample to the noise associated and defined as:

$$\text{SN}(\mathcal{T})(x) = x_{\mathcal{T}}^{-1}(x) := x - \mathcal{T}(x, 0_d).$$

Given these two operators, one can now generate new samples and perform counterfactual computations. More formally, $\text{NS}(\mathcal{T}_{\text{ANM}})$ allows one to generate a sample from the observational distribution given a sample from the exogenous one. In addition, by modifying directly $\mathcal{T}_{\text{ANM}}$, one can define a new function $\mathcal{T}_{\text{ANM}}^{\text{do}}$ that also induces a fixed-point SCM living in $\mathcal{F}_d^{\text{ANM}}$, and compute $\text{NS}(\mathcal{T}_{\text{ANM}}^{\text{do}}) \circ \text{SN}(\mathcal{T}_{\text{ANM}})(x)$ on a data point x in order to obtain the counterfactual sample of x associated to the operation do.

In summary, the second stage of training the causal generative model is done in four stages: a high dimensional causal embedding of the ordered samples, a causal attention mechanism to model ordered DAGs, a causal encoder that parameterises a latent space, a causal decoder that brings back the encoded samples to the original space while preserving the causal structure.

In transformer models, a neural attention function is applied to a query vector q and a set of key-value pairs. Each key-value pair is formed of a key vector $k_i$ and a value vector $v_i$, and the set of key-value pairs is denoted $\{k_i, v_i\}$. $i$ attention score for the ith key-value pair with respect to the query vector q is computed as a i of a dot product of the query vector with the ith q · $k_i$, q · $k_i$. An output is computed as a weighted sum of the value vectors, $\{v_i\}$, weighted by the attention scores.

For example, in a self-attention attention layer of a transformer, query, key and value vectors are all derived from an input sequence (inputted to a self-attention layer) through matrix multiplication. The input sequence comprises multiple input vectors at respective sequence positions, and may be an input to the transformer (e.g., in the form of a token or tokens) or a 'hidden' input from another layer in the transformer. For each input vector $x_j$ in the input sequence, a query vector $q_j$, a key vector $k_j$ and a value vector $v_j$ are computed through matrix multiplication of the input vector $x_j$ with learnable matrices $W^Q$, $W^V$, $W^K$. An attention score $\alpha_{i,j}$ for every input vector $x_j$ with respect to position $j$ (including $i = j$) is given by the softmax of $q_j$ · $k_i$. An output vector $y_j$ for token $j$ is computed as a weighted sum of the values $v_1, v_2, ...,$, weighted by their attention scores: $y_j = \sum_i \alpha_{i,j} v_i$. The attention score $\alpha_{i,j}$ captures the relevance (or relative importance) of input vector $x_j$ to input vector $x_i$.

Auto-encoders encode input data into a compact, latent representation and then decoding it back to a reconstructed output. This makes them suitable for applications like data compression, dimensionality reduction, and generative modelling. They are designed to copy their input to their output, effectively learning an efficient representation of the given data, thereby discovering underlying correlations in the data, allowing the data to represented in a smaller dimension, known as the latent space. The latent space is an essential concept in auto-encoders. It represents the compressed data, which is the output of the encoding stage.

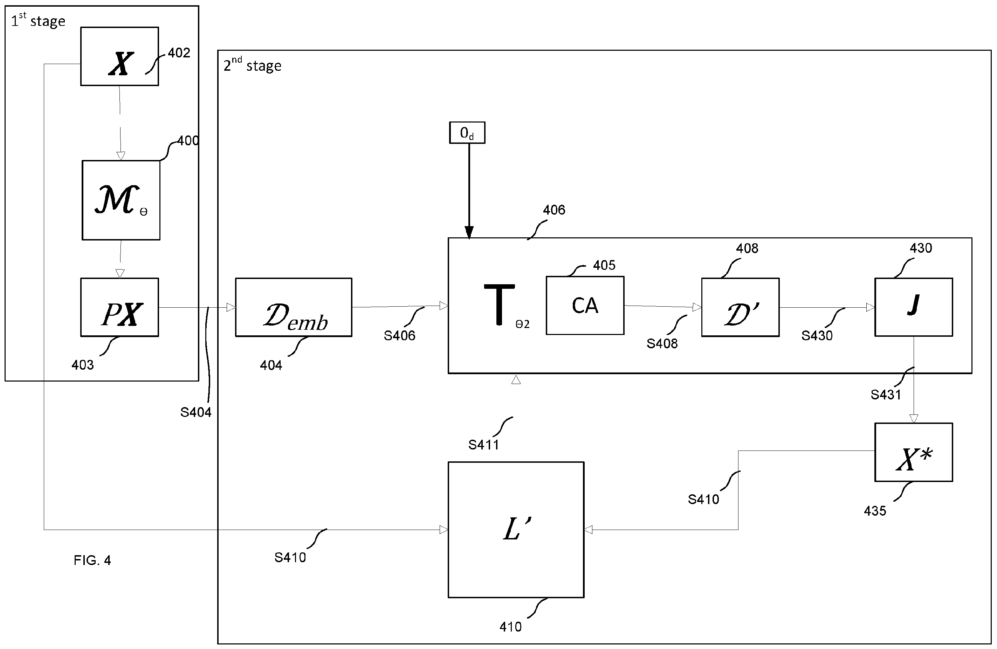

Figure 4 shows an example implementation of a two-stage generative causal model training. In the first stage, a trained causal ordering predictor 400 (e.g., the trained model resulting from the training of Figure 2 or Figure 3) is used to predict a causal ordering P for an input dataset X (402). The predicted causal ordering P is used to reorder the dataset X, resulting a reordered dataset PX (403).

In the second stage a fixed-point causal model 406 (T) is trained. The fixed-point causal model has the form of an autoencoder comprising a transformer-like encoder that encodes an entire causal system (e.g., graph nodes, the causal relationships, counterfactuals etc.). The causal system is encoded in the parameters of T, which are not readily interpretable to a human. However, the trained model T can be used to simulate the causal systems by drawing samples from the trained model.

In the two-stage architecture, at step S404, the training samples in dataset 402 are mapped into a higher dimensional space, using a diagonal embedding method, without modifying the causal relationships of the variables in the samples, to produce an embedded dataset 404 of embedded training samples. In step S406, the embedded dataset 404 is input to the auto-encoder 406. The auto-encoder 406 employs a causal attention mechanism 405.

A conventional attention mechanism is incompatible with DAGs. As described above, conventionally, an attention score $\alpha_{i,j}$ for every input vector $x_i$ with respect to position $j$ (including $i = j$) is given by the softmax of $q_j$ · $k_i$. By viewing $q$ and $k$ as two sequences of d nodes, the attention matrix can be interpreted as a continuous graph explaining the relationships between the nodes. However, the softmax forces all the rows to sum to 1, thus preventing the use of attention to model DAGs, since each node would have at least one parent. Thus, the causal attention mechanism 405, is designed to relax the softmax constraint, and instead use a causal attention matrix, defined such that the rows of the causal attention matrix can sum to any values between [0, 1], and therefore can be used to model any DAGs. Further details are given in the appendix.

In step S408, the auto-encoder 406 generates a dataset 408 of encoded samples using the causal attention mechanism 405.

The auto-encoder T has a second input that received a d-dimensional vector. During training, the input is maintained at a fixed value, such as $0_d$ (denoting a d-dimensional vector of zeros). With the second input fixed at this value, the autoencoder 406 is configured through training to recover the original embedded samples. By varying the second input, different sampled may be generated from a given set of input samples. Such samples are generated in the latent space.

In step S430, generated samples 408 may be decoded from the latent space to the original sample space by a decoder 430, J, which is a parametric function with learnable parameters, which preserves the causal structure of the encoded samples. In step S431, the decoder 430 outputs the decoded samples 435. In step S410, the generated and decoded samples 435 and the dataset 402 are input to the loss function 410, which is evaluated by comparing the generated samples 435 with the dataset 402. In step S411, the parameters $\theta_2$ of model 406 are adjusted to minimise the loss function 410. The loss function employed for training the transformer-based architecture may be a mean squared error (MSE) that captures the difference between the actual observations and the SCM-generated observations for a given topological ordering of variables.

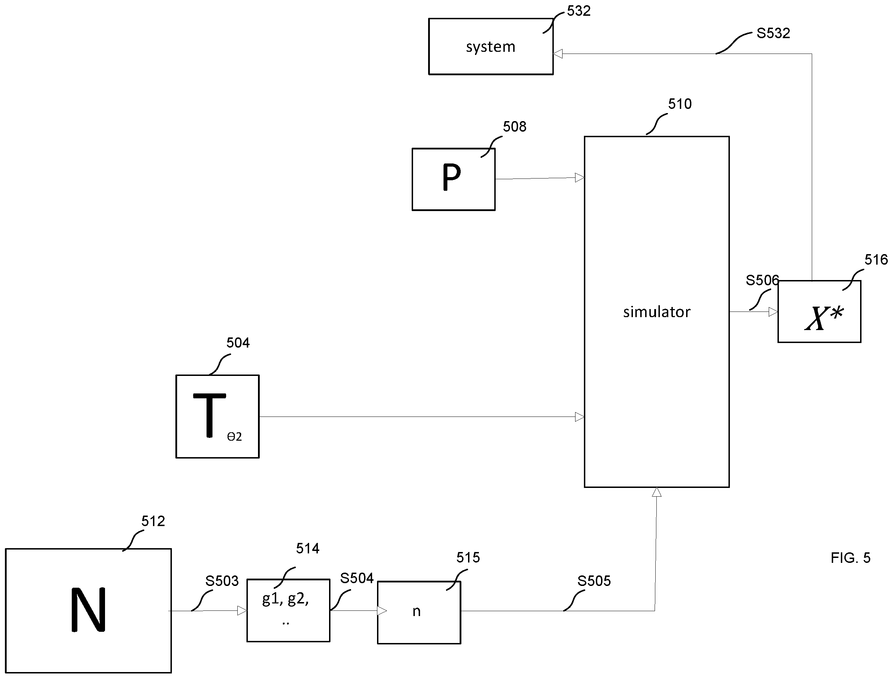

Once the auto-encoder T has been trained, it can be used, to generate a new sample(s). Figure 5 shows a generative procedure applied when using a trained auto-encoder SCM 504 (trained as illustrated in Figure 4). A simulator 510 receives as input the trained auto-encoder SCM 504, in addition to a predicted topological ordering 508 (P) of a dataset used to train the auto-encoder SCM 504. The simulator implements an algorithm for generating new samples therefrom. Algorithm 2 below is one example of such a generative algorithm.

A noise distribution N (512) is used to introduce stochasticity in the generative modelling. In step S503, the noise distribution 512 is sampled using g-functions 514 defined below. In step S504, the g-functions output a sampled noise 515. In step S505, the predicted topological order 508, a fixed-point SCM outputted from trained auto-encoder 504, and the sampled noise 515 are input to the simulator 510. In step S506, the simulator 510 outputs a generated dataset 516 of samples. As discussed with reference to Figure 4, this may additionally involve a decoding operation to represent the samples in the original input space.

In step S532, the dataset 516 generated using the causal generative model may be further used in analysing the properties of an observable system 532 modelled by the trained SCM 504.

Once trained, the model can be applied to determine causal effects and optimal interventions on target systems within and beyond the training domains, and thereby determine and perform optimal action(s) on the system.

A target system may comprise a machine and the causal effect may comprise an estimated treatment effect pertaining to performance of the machine. The machine may be a manufacturing machine, and the estimated treatment effect may pertain to: quality of a product manufactured using the machine, or production efficiency of the machine.

The target system may comprise a computer system and the causal effect may comprise an estimated treatment effect pertaining to usage of memory or processing resources.

The system could alternatively be a living being (human or animal), and the action could be a treatment action performed on the living being. The above causal analysis may be used to estimate a treatment effect and determine an optimal treatment.

The trained model can be used to generate counterfactual data and determine optimal interventions for decision-making in various complex systems.

The trained model may be used to infer topological orderings in a zero-shot manner from new observational datasets, facilitating the application of the model to systems within and beyond the training domains.

The neural network model may be trained using datasets that include both linear and nonlinear causal relationships, as well as homoscedastic and heteroscedastic noise models, to enhance the generalizability of the model.

The learned fixed-point SCMs may be used to simulate the effects of potential interventions on a target system, enabling the selection of optimal actions that can achieve desired outcomes or mitigate negative effects in the system.

The transformer-based architecture is further configured to estimate marginal distributions of exogenous variables in the SCM, facilitating the generation of counterfactual data that is consistent with the observed data distribution. The ability to generate counterfactual data and model the full causal system offers a richer and more nuanced understanding of complex systems, providing a foundation for not only estimating causal effects but also predicting the outcomes of hypothetical interventions.

The SCM may be applied to a target physical system to simulate the outcome of the action, thereby informing decision-making processes in real-world applications.

The causal inference model may be continuously updated with new observational data, thereby refining the SCM and improving the accuracy of counterfactual predictions and intervention recommendations.

The causal inference model may be configured to perform counterfactual reasoning and intervention analysis in real time, supporting dynamic decision-making in complex systems.

## Experiments

The performances of each component of the present causal generative model are evaluated individually. These components are the zero-shot TO inference method $\mathcal{M}$, and the fixed-point SCM parameterization $\mathcal{T}_{\mathrm{ANM}}$. Finally the final causal model is benchmarked, against various baselines.

## Evaluation of $\mathcal{M}$

Data-generating Process: the procedure proposed in (Lorch et al., 2022) is reproduced to generate synthetic datasets and their associated DAGs using randomly sampled SCMs. More precisely, two distributions of SCMs are considered, denoted $\mathbb{P}_{\mathrm{IN}}$ and $\mathbb{P}_{\mathrm{OUT}}$. In $\mathbb{P}_{\mathrm{IN}}$, the graphs are sampled according Erdos-Renyi (Erdos, P. and Renyi, A. On random graphs i. Publ. math. debrecen, 6(290-297):18, 1959) and scale-free models (Barabási, A.-L. and Albert, R. Emergence of scaling in random networks. science, 286(5439):509-512, 1999), while in $\mathbb{P}_{OUT}$, Watts-Strogatz (Watts, D. J. and Strogatz, S. H. Collective dynamics of 'small-world' networks, nature, 393(6684):440-442, 1998) and stochastic block models (Holland, P. W., Laskey, K. B., and Leinhardt, S. Stochastic blockmodels: First steps. Social networks, 5(2):109-137, 1983) are considered. Homoscedastic Gaussian noise is simulated in $\mathbb{P}_{IN}$ but heteroscedastic Laplacian noise is considered $\mathbb{P}_{OUT}$. Finally both $\mathbb{P}_{IN}$ and $\mathbb{P}_{OUT}$ use randomly sampled linear (LIN) and nonlinear functions of random Fourier features (RFF) to model functional relationships, but in $\mathbb{P}_{OUT}$, the parameters of these functions are sampled from a range different from that of $\mathbb{P}_{IN}$. Finally, $\mathbb{P}_{IN}$ is used to amortize the training of $\mathcal{M}$ and $\mathbb{P}_{OUT}$ is used to to evaluate its out-of-distribution (O.O.D) performances.

Train Datasets: During training, K $\simeq$ 200k datasets are generated with their DAGs according to $\mathbb{P}_{IN}$, each consisting of $n_{train}$ = 200 i.i.d samples with $d_{train}$ = 100 dimensions.

Test Datasets: To test the model, 2 in and 2 out of-distribution metadatasets , each consisting of 27 datasets are built. More precisely, **LIN IN** consists of 27 synthetic datasets newly generated according to $\mathbb{P}_{IN}$, and using only linear functions. For each dimension $d_{test} \in \{10, 20, 50\}$, and for a possible choice for the graph distribution, 3 datasets are randomly generated with $n_{test}$ = 10$k$. Similarly, **RFF IN** is generated from $\mathbb{P}_{IN}$ with only RFF functions. Finally **LIN OUT** and **RFF OUT are** generated with the same splitting of the functional relationships but according to $\mathbb{P}_{OUT}$.

Synthetically Generated Datasets: To obtain the two SCM distribution $\mathbb{P}_{IN}$ and $\mathbb{P}_{OUT}$, the setting of (Lorch et al., 2022) in Appendix A Table 3 is exactly reproduced, with the difference that Cauchy distributions for the exogenous variables are not considered, as they are not integrable and therefore the MSE minimization problem is not well defined, as well as the geometric random graphs distributions, as they tend to produce graphs without any edges when setting them with a small radius.

Optimization of $\mathcal{M}$. Recall that $\mathcal{M}$ uses the exact same encoder as the one proposed in (Lorch et al., 2022), on the top of which a simple linear layer is added to classify the encoded nodes whether they are leaves or not. The description of their encoder can be found in Appendix C.2 of (Lorch et al., 2022). To train the model, the Adam implementation of Pytorch (Paszke, A., Gross, S., Chintala, S., Chanan, G., Yang, E., DeVito, Z., Lin, Z., Desmaison, A., Antiga, L., and Lerer, A. Automatic differentiation in pytorch. 2017) is used with a learning rate of 1e - 4 with a weight decay of 5e- 9. The training is run for 2000 epochs, where each epochs contains 96 newly generated datasets from PIN. More precisely, for each configuration of distributions of the training $\mathbb{P}_{IN}$, 16 SCMs are sampled, from which 16 pairs ($\mathcal{D}_{tr}, \mathcal{G}_{train}$) are obtained. Each dataset is of size 200 $\times$ 100, where $n_{train}$ = 200 and $d_{train}$ = 100 denote the sample size and the dimension (or the number of nodes) respectively. Four A100 GPUs are used with a total of 320 GiB of memory and 85 CPUs are used to train the architecture $\mathcal{M}$. The total batch size (cross GPUs) used is 8.

Optimization of $\mathcal{T}_{ANM}$. As explained above, a small architecture with only 2 layers $L = 2$, $d_{head}$ = 32, with 8 heads, an a latent dimension of D = 128 is used. Also recall that the causal encoder uses a multi layer perceptron (MLP), that is as in the classical transformer a fully connected network with two layers and a ReLU activation where the hidden dimension is set to $d_{hidden}$ := 128. Given a dataset $\mathcal{D} \in \mathbb{R}^{n_{tot} \times d}$ where $n_{tot}$ is the total number of samples, it is split into three datasets w.r.t the sample size, with ratio 0.8, 0.1, 0.1 for training, validation and testing respectively. A batch size of $n_{batch}$ := min(1024, 0.8 * $n_{tot}$) is considered to train $\mathcal{T}_{ANM}$. Finally, the same optimizer as the one used to train $\mathcal{M}$ is considered.

Other Datasets: In addition of the test metadatasets defined above, C-Suite (Geffner, T. and Domke, J. Using large ensembles of control variates for variational inference. arXiv preprint arXiv:1810.12482, 2018), SynTReN (Van den Bulcke, T., Van Leemput, K., Naudts, B., van Remortel, P., Ma, H., Verschoren, A., De Moor, B., and Marchal, K. Syntren: a generator of synthetic gene expression data for design and analysis of structure learning algorithms. BMC bioinformatics, 7(1):1-12, 2006) and the real-world dataset of protein measurements from (Sachs, K., Perez, O., Pe'er, D., Lauffenburger, D. A., and Nolan, G. P. Causal protein-signaling networks derived from multiparameter single-cell data. Science, 308(5721): 523-529, 2005) are considered. C-suite consists of various discrete, mixed and continuous datasets but only the continuous ones are considered that are: lingauss, linexp, nonlingauss, nonlin simpson, symprod simpson, large backdoor, and weak arrows. These datasets admit different size of variables ranging from $d$ = 2 to $d$ = 9 nodes and test specific structures to assert the performance of models. For these datasets $n_{tot}$ = 10000 samples are generated. SynTReN creates synthetic transcriptional regulatory networks and produces simulated gene expression data that mimics experimental data. The datasets generated by (Lachapelle, S., Brouillard, P., Deleu, T., and Lacoste-Julien, S. Gradient-based neural dag learning. arXiv preprint arXiv:1906.02226, 2019) that consists of 5 datasets of $n_{tot}$ = 500 samples with d = 20 nodes are used. Finally, Proteins cells consists of one true world dataset of $n_{tot}$ = 853 samples with d = 11. Following (Geffner & Domke, 2018), multiple of them are randomly generated by randomly sub-sampling 800 samples and 5 datasets are created from it.

Baselines: The present methods are compared with the following baselines:

- AVICI (Lorch et al., 2022) using the trained models available at https://github.com/larslorch/avici/tree/main. When applied on **LIN OUT,** their model trained only on linear functional relationships is used, while on **RFF OUT**, the specific model trained for RFF functions is used.

- GES (Chickering, D. M. Optimal structure identification with greedy search. Journal of machine learning research, 3 (Nov):507-554, 2002), GOLEM (Ng et al., 2020), DAG-GNN (Yu, Y., Chen, J., Gao, T., and Yu, M. Dag-gnn: Dag structure learning with graph neural networks. In International Conference on Machine Learning, pp. 7154-7163. PMLR, 2019), GraN-DAG (Lachapelle, S., Brouillard, P., Deleu, T., and Lacoste-Julien, S. Gradient-based neural dag learning. arXiv preprint arXiv:1906.02226, 2019) using the implementations of (Zhang, K., Zhu, S., Kalander, M., Ng, I., Ye, J., Chen, Z., and Pan, L. gcastle: A python toolbox for causal discovery. arXiv preprint arXiv:2111.15155, 2021) available at https://github.com/huaweinoah/trustworthyAI/tree/master/gcastle.

- DP-DAG (Charpentier, B., Kibler, S., and Günnemann, S. Differentiable dag sampling. arXiv preprint arXiv:2203.08509, 2022), using their implementation available at https://github.com/sharpenb/Differentiable-DAG-Sampling.

- DECI (Geffner & Domke, 2018), using their implementation available at https://github.com/microsoft/causica.

- Dowhy, using an implementation available at https://github.com/py-why/dowhy.

While some of these methods should in principle be able to compute counterfactual samples, the only implementations that offer such computations are DECI and DoWhy and therefore comparisons are only made to them for counterfactual predictions.

Computation of the Causal Graph. To obtain a binary graph from , a continuous graph is first estimated defined as the mean of its absolute value Jacobian over samples, i.e.

$$\hat{\mathcal{G}}_c^* := \mathbb{E}_{\boldsymbol{X} \sim \hat{P}_{\boldsymbol{X}}} |\mathrm{Jac}_1 P^T \mathcal{T}_{\mathrm{ANM}}(P\boldsymbol{X}, 0_d)|$$

where $\hat{P}_X$ are the train samples. Then, the binary graph is obtained by applying a naive uniform thresholding $\tau = 0.1$, i.e. $\hat{\mathcal{G}}(\tau) := (\hat{\mathcal{G}}_c > \tau)$, thus discarding values smaller than $\tau$.

Counterfactual Generation. To evaluate the causal inference of the present model, it is proposed to predict counterfactual samples. To measure the quality of these predicted samples, only settings where there is access to the simulators are considered in order to generate new counterfactual samples. Therefore only the test datasets introduced that are LIN IN, LIN OUT, RFF IN, RFF OUT and C-suite are considered . For datasets of size $\mathcal{D}^{n \times d}$, the following procedure is repeated d times : (1) select randomly a node k $\in \{1, ... , d\}$ among the d nodes, (2) then randomly sample a value in the range of this variable by drawing a sample from the uniform distribution of $[\min(X_k), \max(X_k)]$ where the min and max are taken w.r.t the available samples. (3) Finally generate 100 new samples according to this interventions using new observations sampled according the true generative SCM.

**Evaluation Metrics.**

To evaluate the inferred TO, a topological ordering score (TOS) is introduced, a measure that quantifies precisely the quality of the TO inferred. More formally, for a predicted TO $\hat{P} \in \Sigma_d$ and a DAG $\mathcal{G} \in \{0, 1\}^{d \times d}$, the topological ordering score is defined as presented in Algorithm 3. This score counts exactly the number of nodes that are correctly ranked

topologically.

---

**Algorithm 3** TOS($\hat{P}, \mathcal{G}$)

---

**Input:** $\hat{P}, \mathcal{G}$
Initialize $\mathcal{G}_{\hat{P}} = \hat{P}\mathcal{G}^T\hat{P}^T$, and $M \in \{0,1\}^{d \times d}$ s.t.
$M_{i,j} = 0$ if $i \leq j$ and $M_{i,j} = 1$ otherwise.
$\ell \leftarrow (M \odot \mathcal{G}_{\hat{P}})1_d$, TOS $\leftarrow \sum_{i=1}^{d} \mathbb{1}_{\ell_i \geq 1}$
Return $1 - \text{TOS}/(d-1)$

---

Results (Effect of Sub-sampling): Firstly, the effect of the sub-sampling strategy to compute d-TOE (Alg. 1) during training is investigated. For this experiment, smaller models $\mathcal{M}$ are trained on datasets with $n_{train}$ = 200 samples and $d_{train}$ = 20 dimensions, and their performances are compared when varying $d_{max} \in \{2, 10, 20\}$.

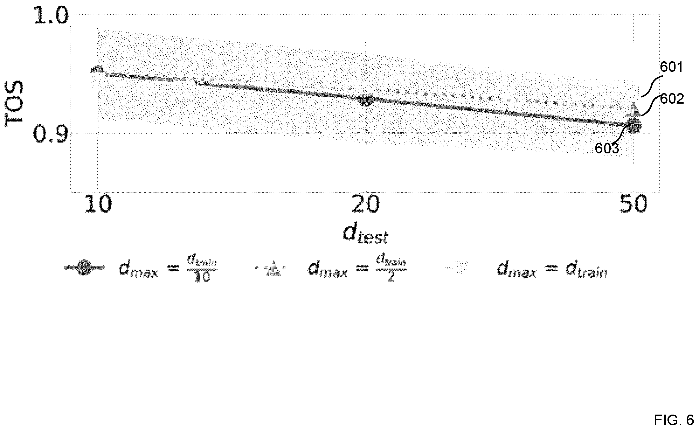

Figure 6 shows a comparison of three models, $\mathcal{M}$, trained on datasets of $n_{train}$ = 200 samples in $d_{train}$ = 20, but with different value for $d_{max}$. The line 601 shows the results for the model where $d_{max} = d_{train}$. The line 602 shows the results for the model where $d_{max} = \frac{d_{train}}{2}$. The line 603 shows the results for the model where $d_{max} = \frac{d_{train}}{10}$. Their TOS on the aggregation of both O.O.D metadatasets LIN OUT and RFF OUT for $d_{test} \in \{10, 20, 50\}$ is measured and shown with the standard deviations. The test is performed on larger instance problems than seen during training when $d_{test}$ = 50.

Figure 6 shows that with only 10% of d-TOE, similar performance is obtained as the full training $d_{max} = d_{train}$. In addition, in Table 1 below, the linear dependency of the memory usage during training w.r.t $d_{max}$ is shown empirically.

Table 1:

Training Memory, Usage of $\mathcal{M}$ with $d_{train}$ = 20.

| $d_{MAX}$ | $d_{TRAIN}/10$ | $d_{TRAIN}/2$ | $d_{TRAIN}$ |
|---|---|---|---|
| MEMORY (GIB) | 3.35 | 6.59 | 8.77 |

Results (Generalization Performance). Next, the performance of the larger model $\mathcal{M}$ trained on datasets of $n_{train}$ = 200 samples in $d_{train}$ = 100 is evaluated, using $d_{max}$ = 50. Larger instances of each test problem are generated, allowing $d_{test} \in \{100, 200\}$.

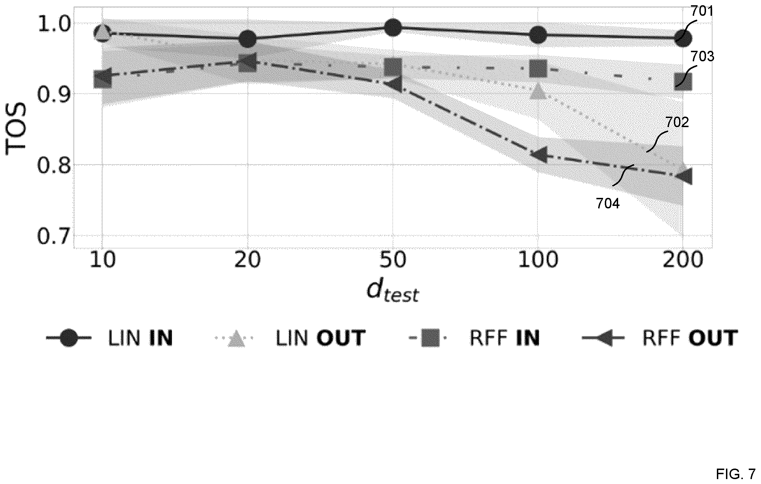

Figure 7 shows a plot of the TOS obtained against the dimension $d_{test}$. For each curve, each point is obtained by averaging over all the test datasets for a given dimension. The standard deviations are also shown. Curve 701 shows the results for LIN IN. Curve 702 shows the results for LIN OUT. Curve 703 shows the results for RFF IN. Curve 704 shows the results for RFF OUT. Figure 7 shows that the model is able to generalize on O.O.D datasets of smaller or equal size, and even to significantly larger problems.

**Evaluation of $\mathcal{T}_{ANM}$**

The performances of the $\mathcal{T}_{ANM}$ parameterization for learning fixed-point SCMs are evaluated when a true topological ordering is given on both causal discovery and inference tasks.

Dataset: Besides reusing the synthetic metadatasets described above, three other settings are considered where the causal graphs are accessible, namely C-Suite (Geffner & Domke, 2018), SynTReN (Van den Bulcke et al., 2006; Lachapelle et al., 2019) and the real-world dataset of protein measurements from (Sachs et al., 2005). They all consist of multiple datasets with continuous variables, except C-Suite where the discrete and mixed type problems are discarded.

Model Configuration: $\mathcal{T}_{ANM}$ is considered with an embedding dimension of D = 128, and L = 2 layers. The causal attention mechanism uses 8 heads with an embedding dimension of $d_{head}$ = 32. The model is not hyper-tuned on each specific instance, but uses the same training configuration for all experiments.

Table 2: The counterfactual predictions of $\mathcal{T}_{\text{ANM}}$ are compared when trained with the true graph or the TO on various settings. The relative $\ell 1$ distance is measured between the predicted counterfactual samples and the ground truth ones. The results presented are of the form $x/y$ ($z$) where $x$ is the median, $y$ the mean and $z$ the standard deviation (std) w.r.t the number of datasets of the averaged errors.

| DATASETS | TRUE $P$ | TRUE $\mathcal{G}$ |
|---|---|---|
| LIN **IN** | 0.085 / 0.15 (0.15) | 0.012 / 0.021 (0.024) |
| LIN **OUT** | 0.15 / 0.34 (0.74) | 0.014 / 0.029 (0.037) |
| RFF **IN** | 0.15 / 0.37 (0.70) | 0.062 / 0.19 (0.34) |
| RFF **OUT** | 0.21 / 0.27 (0.29) | 0.029 / 0.067 (0.077) |
| C-SUITE | 0.080 / 0.10 (0.10) | 0.040 / 0.065 (0.067) |

Results (Graph Prediction): The performances of $\mathcal{T}_{\text{ANM}}$ is tested on DAG recovery problems. To obtain a binary graph from the model, a continuous graph defined as the mean of its absolute value Jacobian over samples is estimated,

i.e. $$\hat{\mathcal{G}}_c := \mathbb{E}_{X \sim \hat{P}_X} |\text{Jac}_1 P^T \mathcal{T}_{\text{ANM}}(PX, 0_d)|$$ . Then, the binary graph is obtained by applying a naive

uniform threshold $\tau > 0$, i.e. $\hat{\mathcal{G}}(\tau) := (\hat{\mathcal{G}}_c > \tau)$, thus discarding values smaller than $\tau$. In practice it is proposed to use $\tau = 0.1$.

To evaluate the prediction and the proposed rule, F1 scores obtained by $\mathcal{T}_{\text{ANM}}$ when trained given either the topological ordering or the causal graph are compared, the latter being considered as the gold standard of the model.

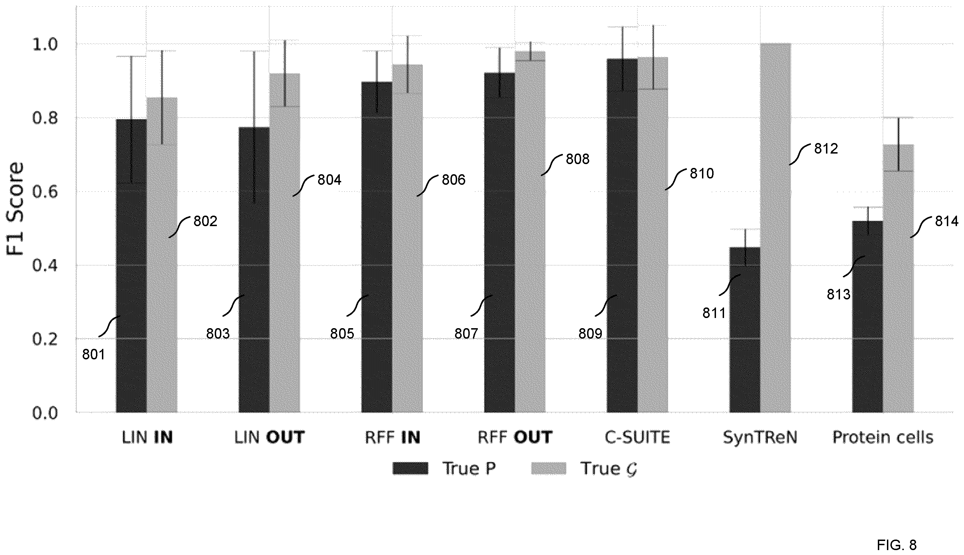

Figure 8 shows a comparison of F1 scores obtained by learning $\mathcal{T}_{\text{ANM}}$ with either the full graph or the TO on various settings. These score are obtained by comparing $\hat{\mathcal{G}}(0.1)$ with the ground truth graph and the averaged score over all instances of a given setting are shown with their standard deviations. Bar 801 shows that the F1 score for LIN IN using the TO is about 0.8. Bar 802 shows that the F1 score for LIN IN is about 0.88 when using the full graph. Bar 803 shows that the F1 score for LIN OUT using the TO is about 0.78. Bar 804 shows that the F1 score for LIN OUT is about 0.9 when using the full graph. Bar 805 shows that the F1 score for RFF IN using the TO is about 0.89. Bar 806 shows that the F1 score for RFF IN is about 0.92 when using the full graph. Bar 807 shows that the F1 score for RFF OUT using the TO is about 0.9. Bar 808 shows that the F1 score for RFF out is about 0.99 when using the full graph. Bar 809 shows that the F1 score for C-SUITE using the TO is about 0.98. Bar 810 shows that the F1 score for C-SUITE is about 0.98 when using the full

graph. Bar 811 shows that the F1 score for SynTReN using the TO is about 0.44. Bar 812 shows that the F1 score for SynTReN is about 1.0 when using the full graph. Bar 813 shows that the F1 score for Protein cells dataset using the TO is about 0.52. Bar shows that the F1 score for Protein cells dataset is about 0.72 when using the full graph. Figure 8 shows that the model trained given the TO is still able to compete with the gold standard one, and the proposed rule, while not optimal, is able to keep most of the true non-zeros.

Results (Counterfactual Prediction): The counterfactual predictions of $\mathcal{T}_{\text{ANM}}$ are evaluated. As the ground truth counterfactual samples (CF) need to be generated, only the test metadatasets as described above, and those of C-Suite are considered. For each setting, and each dataset, as many interventions as the number of nodes in the dataset are generated, where each intervention is performed on 100 generated test samples. To measure the quality of a generated counterfactual sample, the relative $\ell 1$ distance to the ground truth is measured, that is

$$R - \ell_1(x, \hat{x}) := \sum_{i=1}^d |x_i - \hat{x}_i| / |x_i|$$ . In table 2, it is shown that $\mathcal{T}_{\text{ANM}}$ can recover perfectly the ground truth CF samples when learned with true DAGs and obtain 21% median (and 39% mean) errors at worst using TOs. High std are due to the fact that among the instances, some training were not successful and require more tuning.

**Full Pipeline Benchmarking**

Finally the final causal generative modelling pipeline, obtained by combining $\mathcal{M}$ and $\mathcal{T}_{\text{ANM}}$ is evaluated, against various baselines on both causal discovery and counterfactual prediction tasks. More formally, given a new instance problem $\mathcal{D}$, the pre-trained zero-shot TO inference model $\mathcal{M}$ is used to predict a TO $P$ from $\mathcal{D}$, and then learn $\mathcal{T}_{\text{ANM}}$ by minimizing (6) where P is replaced by the predicted TP $\hat{P}$. The present method is called FiP standing for Fixed-Point model.

Baselines. On causal discovery tasks, the present model is compared with AVICI (Lorch et al., 2022), PC (Kalisch, M. and Bühlman, P. Estimating high-dimensional directed acyclic graphs with the pc-algorithm. Journal of Machine Learning Research, 8(3), 2007), GES (Chickering, 2002), GOLEM (Ng et al., 2020), DAG-GNN (Yu et al., 2019), GraNDAG (Lachapelle et al., 2019), DP-DAG (Charpentier et al., 2022), and DECI (Geffner & Domke, 2018). On counterfactual prediction tasks, only comparisons with DoWhy (Blöbaum et al., 2022) trained with the true causal graph and DECI are done, as other baselines do not provide this functionality in their codes.

Results: tables 3 and 4 show that the present model outperforms consistently all the other baselines on both causal discovery and counterfactual predictions tasks over the generated O.O.D test datasets **LIN OUT** and **RFF OUT.**

Table 3: The directed F1 scores obtained by the present model are compared against various baselines on the out-of-distribution test metadatasets introduced above. The values reported are obtained by taking for each setting the mean over all the datasets as well as their standard deviations.

| DATASETS | LIN **OUT** | RFF **OUT** |
|---|---|---|
| PC | 0.47 (0.14) | 0.40 (0.12) |
| GES | 0.56 (0.12) | 0.37 (0.060) |
| GOLEM | 0.73 (0.29) | 0.31 (0.13) |
| DECI | 0.36 (0.13) | 0.74 (0.14) |
| GRAN-DAG | 0.29 (0.19) | 0.50 (0.26) |
| DAG-GNN | 0.61 (0.19) | 0.44 (0.15) |
| DP-DAG | 0.17 (0.074) | 0.16 (0.067) |
| AVICI | 0.73 (0.16) | 0.74 (0.17) |
| FIP (OURS) | 0.76(0.20) | 0.81(0.15) |

Table 4: The counterfactual predictions obtained by the present model are compared against other baselines on the O.O.D metadatasets. The metrics reported are the relative $\ell_1$ errors to the ground truth following the same format as Table 2.

| DATASETS | LIN **OUT** | RFF **OUT** |
|---|---|---|
| DOWHY W. $\mathcal{G}$ | 4.12 / 5.53 (3.50) | 2.52 / 3.71 (3.89) |
| DECI | 0.45 / 0.69 (0.69) | 0.26 / 0.28 (0.25) |
| FIP (OURS) | 0.15 / 0.39 (0.66) | 0.24 / 0.27 (0.30) |

Certain example embodiments are described below.

Example 1 comprises a computer-implemented method, comprising: formulating SCMs as fixed-point problems on causally ordered variables to capture the causal generative process of complex systems; training a neural network model to sequentially predict the topological ordering of variables within a causal structure based on observational data from multiple domains; designing a transformer-based architecture that utilizes a novel attention mechanism to parameterize the causal mechanisms of the SCM given the inferred topological order; using the trained model to generate counterfactual data and determine optimal interventions for decision-making in various complex systems.

Example 2 comprises the method of Example 1, further comprising: amortizing the learning of the topological ordering inference task by training the neural network model on synthetic datasets generated from a wide range of causal structures; employing the trained model to infer topological orderings in a zero-shot manner from new observational datasets, facilitating the application of the model to systems within and beyond the training domains.

Example 3 comprises the method of Example 2, wherein the neural network model is trained using datasets that include both linear and nonlinear causal relationships, as well as homoscedastic and heteroscedastic noise models, to enhance the generalizability of the model.

Example 4 comprises the method of any preceding example, wherein the transformer-based architecture is trained to learn fixed-point SCMs by minimizing a loss function that quantifies the discrepancy between observed data and data generated by the model according to the inferred causal structure.

Example 5 comprises the method of any preceding example, wherein the learned fixed-point SCMs are used to simulate the effects of potential interventions on a target system, enabling the selection of optimal actions that can achieve desired outcomes or mitigate negative effects in the system.

Example 6 comprises the method of Example 4, wherein the loss function employed for training the transformer-based architecture is a mean squared error (MSE) that captures the difference between the actual observations and the SCM-generated observations for a given topological ordering of variables.

Example 7 comprises the method of any preceding example, wherein the transformer-based architecture is further configured to estimate the marginal distributions of exogenous variables in the SCM, facilitating the generation of counterfactual data that is consistent with the observed data distribution.

Example 8 comprises a computer system comprising: at least one memory configured to store computer-readable instructions and training data from multiple domains; at least one hardware processor coupled to the at least one memory, wherein the computer-readable instructions are configured to cause the at least one hardware processor to implement the method of any preceding claim, thereby enabling the system to learn and apply SCMs across various domains.

Example 9 comprises the computer system of Example 8, wherein the at least one hardware processor is configured to perform the further treatment action by applying the SCM to a target physical system to simulate the outcome of the action, thereby informing decision-making processes in real-world applications.

Example 10 comprises the computer system of Example 8, wherein the at least one hardware processor is configured to apply the trained transformer-based architecture to new datasets obtained from physical systems in domains not encountered during training, thereby demonstrating zero-shot generalization capabilities.

Example 11 comprises the computer system of any of Examples 8 to 10, wherein the computer-readable instructions further cause the at least one hardware processor to: estimate the causal effect of actions on the target system by simulating counterfactual scenarios using the learned SCM; determine the most effective intervention by comparing the simulated outcomes of various potential actions.

Example 12 comprises computer-readable storage media embodying computer-readable instructions, the computer-readable instructions configured upon execution on at least one hardware processor to cause the at least one hardware processor to implement the method of any preceding example, comprising: receiving observational data from a target system; applying the trained causal inference model to the observational data to infer a topological ordering of variables and estimate the causal mechanisms; generating counterfactual data based on the estimated SCM and inferring the causal effect of potential interventions; recommending an optimal action based on the inferred causal effect.

Example 13 comprises the computer-readable storage media of Example 12, wherein the computer-readable instructions further cause the at least one hardware processor to: continuously update the causal inference model with new observational data, thereby refining the SCM and improving the accuracy of counterfactual predictions and intervention recommendations.

Example 14 comprises the computer-readable storage media of example 12 or 13, wherein the causal inference model is a transformer neural network architecture trained on a dataset comprising diverse causal structures from multiple domains, enabling the model to generalize to new, unseen datasets.

Example 15 comprises the computer-readable storage media of any of Examples 12 to 14, wherein the causal inference model is configured to perform counterfactual reasoning and intervention analysis in real time, supporting dynamic decision-making in complex systems.

Example 16 comprises a computer-implemented method, comprising receiving as input a dataset of samples; computing from the dataset, using a trained causal ordering predictor, a predicted causal ordering for the dataset; training based on the dataset and the predicted causal ordering a generative structural causal model (SCM), resulting in a trained generative SCM; determining an action; generating using the trained generative SCM a predicted causal effect of the action; and based on the predicted causal effect, performing the action on a target system.

Example 17 comprises the method of Example 16, wherein each sample of the dataset comprises an observed outcome.

Example 18 comprises the method of Example 16 or 17, wherein observation of each sample of the dataset has been obtained from the target system or another system representative of the target system.

Example 19 comprises the method of Example 16, 17 or 18, wherein the trained causal ordering predictor has an attention-based transformer architecture.

Example 20 comprises the method of any of Examples 16 to 19, further comprising receiving as input a causal graph; generating a training sample based on the causal graph; determining based on the causal graph a ground truth causal ordering for the training sample; and training the causal ordering predictor based on the training sample and the ground truth causal ordering.

Example 21 comprises the method of any of Examples 16 to 20, wherein the target system is a machine or a software system.

Example 22 comprises the method of any of Examples 16 to 20, wherein the target system is a living being.

Example 23 comprises the method of any of Examples 16 to 22, wherein the action is one of multiple actions, wherein respective predicted casual effects of the multiple actions are generated using the trained generative SCM, and the action is selected form the multiple actions for performing on the target system based on the respective predicted causal effects.

Example 24 comprises the method of any of examples 16 to 22, in which the predicted causal effect is a predicted technical effect controlled by the action.

Example 25 comprises the method of Example 24, in which the project technical effect is a predicted machine efficiency or predicted machine performance.

Example 26 comprises the method of Example 24 or 25, in which the technical effect is: predicted usage of memory or processing resources, predicted manufacturing or production efficiency, or predicted manufacturing or production quality.

Example 27 comprises a computer system comprising a memory configured to store computer-readable instructions; a processor coupled to the memory, and configured to execute the computer-readable instructions, which upon execution cause the processor to implement the method of any of Examples 16 to 26.

Example 28 comprises a non-transitory medium comprising computer-readable instructions; a processor coupled to the memory, and configured to execute the computer-readable instructions, which upon execution on a processor cause the processor to implement the method of any of Examples 16 to 26.

Example 29 comprises a computer-implemented method, comprising: receiving as input a first value associated with a first variable and a second value associated with a second variable; computing based on the first value and the second value, using a trained causal ordering predictor, a predicted causal ordering of the first variable and the second variable; training based on the first value, the second value and the predicted causal ordering a generative structural causal model (SCM), resulting in a trained generative SCM; determining an action; generating using the trained generative SCM a predicted causal effect of the action; and based on the predicted causal effect, performing the action on a target system.

Example 30 comprises the method of Example 29, wherein the first value and the second value have been obtained from the target system or another system representative of the target system.

Example 31 comprises the method of Example 29, wherein the trained causal ordering predictor has an attention-based transformer architecture.

Example 32 comprises the method of Example 29, comprising: receiving as input a causal graph; generating a training sample based on the causal graph; determining based on the causal graph a ground truth causal ordering for the training sample; and training the causal ordering predictor based on the training sample and the ground truth causal ordering.

Example 33 comprises the method of Example 29, wherein the target system is a machine or a software system.

Example 34 comprises the method of Example 29, wherein the target system is a living being.

Example 35 comprises the method of Example 29, wherein the action is one of multiple actions, wherein respective predicted casual effects of the multiple actions are generated using the trained generative SCM, and the action is selected from the multiple actions for performing on the target system based on the respective predicted causal effects.

Example 36 comprises the method of Example 29, wherein the predicted causal effect is a predicted technical effect controlled by the action.

Example 37 comprises the method of Example 36, wherein the project technical effect is a predicted machine efficiency or predicted machine performance.

Example 38 comprises the method of Example 36 wherein the technical effect is: predicted usage of memory or processing resources, predicted manufacturing or production efficiency, or predicted manufacturing or production quality.

Example 39 comprises a computer system comprising: a memory configured to store computer-readable instructions; a processor coupled to the memory, and configured to execute the computer-readable instructions, which upon execution cause the processor to perform operations comprising: receiving as input a first value associated with a first variable and a second value associated with a second variable; computing based on the first value and the second value, using a trained causal ordering predictor, a predicted causal ordering of the first variable and the second variable; training based on the first value, the second value and the predicted causal ordering a generative structural causal model (SCM), resulting in a trained generative SCM; determining an action; generating using the trained generative SCM a predicted causal effect of the action; and based on the predicted causal effect, performing the action on a target system.

Example 40 comprises the computer system of Example 39, wherein the trained causal ordering predictor has an attention-based transformer architecture.

Example 41 comprises the computer system of Example 39, wherein the computer-readable instructions further cause the processor to: receive as input a causal graph; generate a training sample based on the causal graph; determine based on the causal graph a ground truth causal ordering for the training sample; and train the causal ordering predictor based on the training sample and the ground truth causal ordering.

Example 42 comprises the computer system of Example 39, wherein the target system is a machine or a software system.

Example 43 comprises the computer system of Example 39, wherein the target system is a living being.

Example 44 comprises the computer system of Example 39, wherein the action is one of multiple actions, wherein respective predicted casual effects of the multiple actions are generated using the trained generative SCM, and the action is selected form the multiple actions for performing on the target system based on the respective predicted causal effects.

Example 45 comprises a non-transitory medium comprising computer-readable instructions; a processor coupled to the memory, and configured to execute the computer-readable instructions, which upon execution on a processor cause the processor to perform operations comprising: receiving as input a first value associated with a first variable and a second value associated with a second variable; computing based on the first value and the second value, using a trained causal ordering predictor, a predicted causal ordering of the first variable and the second variable; training based on the first value, the second value and the predicted causal ordering a generative structural causal model (SCM), resulting in a trained generative SCM; determining an action; generating using the trained generative SCM a predicted causal effect of the action; and based on the predicted causal effect, performing the action on a target system.

Example 46 comprises the non-transitory medium of Example 45, wherein the first value and the second value have been obtained from the target system or another system representative of the target system.

Example 47 comprises the non-transitory medium of Example 45, wherein the trained causal ordering predictor has an attention-based transformer architecture.

Example 48 comprises the non-transitory medium of Example 45, wherein the predicted causal action pertains to machine efficiency or machine performance.

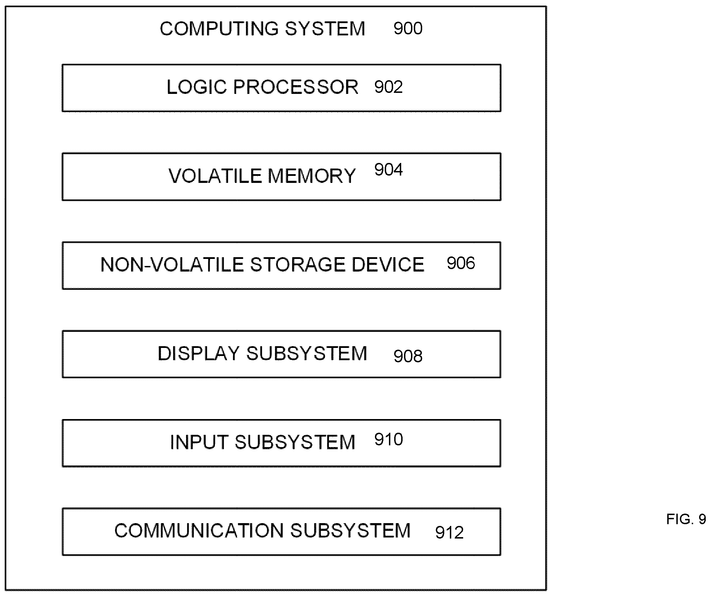

Figure 9 schematically shows a non-limiting example of a computing system 900, such as a computing device or system of connected computing devices, that can enact one or more of the methods or processes described above, including the filtering of data and implementation of the structured knowledge base described above. Computing system 900 is shown in simplified form. Computing system 900 includes a logic processor 902, volatile memory 904, and a non-volatile storage device 906. Computing system 900 may optionally include a display subsystem 908, input subsystem 910, communication subsystem 912, and/or other components not shown in FIG. 6. Logic processor 902 comprises one or more physical (hardware) processors configured to carry out processing operations. For example, the logic processor 902 may be configured to execute instructions that are part of one or more applications, programs, routines, libraries, objects, components, data structures, or other logical constructs. The logic processor 902 may include one or more hardware processors configured to execute software instructions based on an instruction set architecture, such as a central processing unit (CPU), graphical processing unit (GPU) or other form of accelerator processor. Additionally, or alternatively, the logic processor 902 may include a hardware processor(s)) in the form of a logic circuit or firmware device configured to execute hardware-implemented logic (programmable or non-programmable) or firmware instructions. Processor(s) of the logic processor 902 may be single-core or multi-core, and the instructions executed thereon may be configured for sequential, parallel, and/or distributed processing. Individual components of the logic processor optionally may be distributed among two or more separate devices, which may be remotely located and/or configured for coordinated processing. Aspects of the logic processor 902 may be virtualized and executed by remotely accessible, networked computing devices configured in a cloud-computing configuration. In such a case, these virtualized aspects are run on different physical logic processors of various different machines. Non-volatile storage device 906 includes one or more physical devices configured to hold instructions executable by the logic processor 902 to implement the methods and processes described herein. When such methods and processes are implemented, the state of non-volatile storage device 906 may be transformed - e.g., to hold different data. Non-volatile storage device 906 may include physical devices that are removable and/or built-in. Non-volatile storage device 906 may include optical memory (e g., CD, DVD, HD-DVD, Blu-Ray Disc, etc.), semiconductor memory (e g., ROM, EPROM, EEPROM, FLASH memory, etc.), and/or magnetic memory (e.g., hard-disk drive), or other mass storage device technology. Non-volatile storage device 906 includes for example non-volatile, dynamic, static, read/write, read-only, sequential-access, location-addressable, file-addressable, and/or content-addressable devices. Volatile memory 904 includes for example one or more physical devices that include random access memory. Volatile memory 904 is typically utilized by logic processor 902 to temporarily store information during processing of software instructions. Aspects of logic processor 902, volatile memory 904, and non-volatile storage device 906 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example. The terms "module," "program," and "engine" may be used to describe an aspect of computing system 900 typically implemented in software by a processor to perform a particular function using portions of volatile memory, which function involves transformative processing that specially configures the processor to perform the function. Thus, a module, program, or engine may be instantiated via logic processor 902 executing instructions held by non-volatile storage device 906, using portions of volatile memory 904. Different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms "module," "program," and "engine" may encompass individual or groups of executable files, data files, libraries, drivers, scripts, database records, etc. When included, display subsystem 908 may be used to present a visual representation of data held by non-volatile storage device 906. The visual representation may take the form of a graphical user interface (GUI). As the herein-described methods and processes change the data held by the non-volatile storage device, and thus transform the state of the non-volatile storage device, the state of display subsystem 908 may likewise be transformed to visually represent changes in the underlying data. Display subsystem 908 may include one or more display devices utilizing virtually any type of technology. Such display devices may be combined with logic processor 902, volatile memory 904, and/or non-volatile storage device 906 in a shared enclosure, or such display devices may be peripheral display devices. When included, input subsystem 910 may comprise or interface with one or more user-input devices such as a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity; and/or any other suitable sensor. When included, communication subsystem 912 may be configured to communicatively couple various computing devices described herein with each other, and with other devices. Communication subsystem 912 may include wired and/or wireless communication devices compatible with one or more different communication protocols. As non-limiting examples, the communication subsystem may be configured for communication via a wireless telephone network, or a wired or wireless local- or wide-area network. In some embodiments, the communication subsystem may allow computing system 900 to send and/or receive messages to and/or from other devices via a network such as the internet. The term computer readable media as used herein includes computer storage media. Computer storage media includes, among other things, volatile and non-volatile, removable and nonremovable media (e.g., volatile memory 904 or non-volatile storage 906) implemented in any method or technology for storage of information, such as computer readable instructions, data structures, or program modules. Computer storage media includes, among other things, RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information, and which can be accessed by a computing device (e.g. the computing system 900 or a component device thereof). Computer storage media does not include a carrier wave or other propagated or modulated data signal. Communication media may be embodied by computer readable instructions, data structures, program modules, or other data in a modulated data signal, such as a carrier wave or other transport mechanism, and includes any information delivery media. The term "modulated data signal" describes a signal that has one or more characteristics set or changed in such a manner as to encode information in the signal. By way of example, and not limitation, communication media includes wired media such as a wired network or direct wired connection, and wireless media such as acoustic, radio frequency (RF), infrared, and other wireless media.

Embodiments have been described by way of example only. The scope is not limited by the described embodiments but only by the accompanying claims.

**Claims**

1. A computer-implemented method, comprising:

   receiving as input a first value associated with a first variable and a second value associated with a second variable;
   computing based on the first value and the second value, using a trained causal ordering predictor, a predicted causal ordering of the first variable and the second variable;
   training based on the first value, the second value and the predicted causal ordering a generative structural causal model (SCM), resulting in a trained generative SCM;
   determining an action;
   generating using the trained generative SCM a predicted causal effect of the action; and
   based on the predicted causal effect, performing the action on a target system.

2. The method of claim 1, wherein the first value and the second value have been obtained from the target system or another system representative of the target system, and wherein the trained causal ordering predictor optionally has an attention-based transformer architecture.

3. The method of any preceding claim, comprising:

   receiving as input a causal graph;
   generating a training sample based on the causal graph;
   determining based on the causal graph a ground truth causal ordering for the training sample; and
   training the causal ordering predictor based on the training sample and the ground truth causal ordering.

4. The method of any preceding claim, wherein the target system is a machine or a software system or a living being.

5. The method of any preceding claim, wherein the action is one of multiple actions, wherein respective predicted casual effects of the multiple actions are generated using the trained generative SCM, and the action is selected from the multiple actions for performing on the target system based on the respective predicted causal effects.

6. The method of any preceding claim, wherein the predicted causal effect is a predicted technical effect controlled by the action and wherein the project technical effect is optionally a predicted machine efficiency or predicted machine performance.

7. The method of claim 6, wherein the technical effect is:

   predicted usage of memory or processing resources,
   predicted manufacturing or production efficiency, or
   predicted manufacturing or production quality.

8. A computer system comprising:

   a memory configured to store computer-readable instructions;
   a processor coupled to the memory, and configured to execute the computer-readable instructions, which upon execution cause the processor to perform operations comprising:

      receiving as input a first value associated with a first variable and a second value associated with a second variable;
      computing based on the first value and the second value, using a trained causal ordering predictor, a predicted causal ordering of the first variable and the second variable;
      training based on the first value, the second value and the predicted causal ordering a generative structural causal model (SCM), resulting in a trained generative SCM;
      determining an action;
      generating using the trained generative SCM a predicted causal effect of the action; and
      based on the predicted causal effect, performing the action on a target system.

9. The computer system of claim 8, wherein the trained causal ordering predictor has an attention-based transformer architecture, and wherein the target system is optionally a machine or a software system or a living being.

10. The computer system of claim 8 or claim 9, wherein the computer-readable instructions further cause the processor to:

   receive as input a causal graph;
   generate a training sample based on the causal graph;
   determine based on the causal graph a ground truth causal ordering for the training sample; and
   train the causal ordering predictor based on the training sample and the ground truth causal ordering.

11. The computer system of any of claim 8 to 10, wherein the action is one of multiple actions, wherein respective predicted casual effects of the multiple actions are generated using the trained generative SCM, and the action is selected form the multiple actions for performing on the target system based on the respective predicted causal effects.

**12.** A non-transitory medium comprising computer-readable instructions;

a processor coupled to the memory, and configured to execute the computer-readable instructions, which upon execution on a processor cause the processor to perform operations comprising:
receiving as input a first value associated with a first variable and a second value associated with a second variable;
computing based on the first value and the second value, using a trained causal ordering predictor, a predicted causal ordering of the first variable and the second variable;
training based on the first value, the second value and the predicted causal ordering a generative structural causal model (SCM), resulting in a trained generative SCM;
determining an action;
generating using the trained generative SCM a predicted causal effect of the action; and
based on the predicted causal effect, performing the action on a target system.

**13.** The non-transitory medium of claim 12, wherein the first value and the second value have been obtained from the target system or another system representative of the target system.

**14.** The non-transitory medium of claim 12 or claim 13, wherein the trained causal ordering predictor has an attention-based transformer architecture.

**15.** The non-transitory medium of any of claims 12 to 14, wherein the predicted causal action pertains to machine efficiency or machine performance.

FIG. 1

FIG. 2

$\hat{P} = \{4,2,1,7 \dots\}$

$P = \{2,3,5,1 \dots\}$

FIG. 3

EP 4 621 647 A2

FIG. 4

EP 4 621 647 A2

FIG. 5

FIG. 6

EP 4 621 647 A2

FIG. 7

FIG. 8

COMPUTING SYSTEM    900

LOGIC PROCESSOR   902

VOLATILE MEMORY   904

NON-VOLATILE STORAGE DEVICE    906

DISPLAY SUBSYSTEM    908

INPUT SUBSYSTEM   910

COMMUNICATION SUBSYSTEM    912

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LORCH, L.** ; **SUSSEX, S.** ; **ROTHFUSS, J.** ; **KRAUSE, A.** ; **SCHÖLKOPF, B.** Amortized inference for causal structure learning. *Advances in Neural Information Processing Systems*, 2022, vol. 35, 13104-13118
- Causal autoregressive flows. **KHEMAKHEM, I.** ; **MONTI, R.** ; **LEECH, R.** ; **HYVARINEN, A.** International Conference on Artificial Intelligence and Statistics. PMLR, 2021, 3520-3528
- **JAVALOY, A.** ; **SÁNCHEZ-MARTÍN, P.** ; **VALERA, I.** Causal normalizing flows: from theory to practice. *arXiv preprint arXiv:2306.05415*, 2023
- **VASWANI, A.** ; **SHAZEER, N.** ; **PARMAR, N.** ; **USZKOREIT, J.** ; **JONES, L.** ; **GOMEZ, A. N.** ; **KAISER, L.** ; **POLOSUKHIN, I.** Attention is all you need. *Advances in neural information processing systems*, 2017, vol. 30
- **VILLANI, C.** Optimal transport: old and new. Springer, 2009, vol. 338
- **PEYRÉ, G.** ; **CUTURI, M. et al.** Computational optimal transport: With applications to data science. *Foundations and Trends® in Machine Learning*, 2019, vol. 11 (5-6), 355-607
- **ERDOS, P.** ; **RENYI, A.** On random graphs i. *Publ. math. debrecen*, 1959, vol. 6 (290-297), 18
- **BARABÁSI, A.-L.** ; **ALBERT, R.** Emergence of scaling in random networks. *science*, 1999, vol. 286 (5439), 509-512
- **WATTS, D. J.** ; **STROGATZ, S. H.** Collective dynamics of 'small-world' networks. *nature*, 1998, vol. 393 (6684), 440-442
- **HOLLAND, P. W.** ; **LASKEY, K. B.** ; **LEINHARDT, S.** Stochastic blockmodels: First steps. *Social networks*, 1983, vol. 5 (2), 109-137
- **GEFFNER, T.** ; **DOMKE, J.** Using large ensembles of control variates for variational inference. *arXiv:1810.12482*, 2018

- **VAN DEN BULCKE, T.** ; **VAN LEEMPUT, K.** ; **NAUDTS, B.** ; **VAN REMORTEL, P.** ; **MA, H.** ; **VERSCHOREN, A.** ; **DE MOOR, B.** ; **MARCHAL, K.** Syntren: a generator of synthetic gene expression data for design and analysis of structure learning algorithms. *BMC bioinformatics*, 2006, vol. 7 (1), 1-12
- **SACHS, K.** ; **PEREZ, O.** ; **PE'ER, D.** ; **LAUFFENBURGER, D. A.** ; **NOLAN, G. P.** Causal protein-signaling networks derived from multiparameter single-cell data. *Science*, 2005, vol. 308 (5721), 523-529
- **LACHAPELLE, S.** ; **BROUILLARD, P.** ; **DELEU, T.** ; **LACOSTE-JULIEN, S.** Gradient-based neural dag learning. *arXiv preprint arXiv:1906.02226*, 2019
- **CHICKERING, D. M.** Optimal structure identification with greedy search.. *Journal of machine learning research*, 2002, vol. 3, 507-554
- **YU, Y.** ; **CHEN, J.** ; **GAO, T.** ; **YU, M.** Dag-gnn: Dag structure learning with graph neural networks. *In International Conference on Machine Learning*, 7154-7163
- **ZHANG, K.** ; **ZHU, S.** ; **KALANDER, M.** ; **NG, I.** ; **YE, J.** ; **CHEN, Z.** ; **PAN, L.** gcastle: A python toolbox for causal discovery. *arXiv preprint arXiv:2111.15155*, 2021, https://github.com/huaweinoah/trust-worthyAI/tree/master/gcastle
- **CHARPENTIER, B.** ; **KIBLER, S.** ; **GÜNNEMANN, S.** Differentiable dag sampling. *arXiv preprint arXiv:2203.08509*, 2022
- **KALISCH, M.** ; **BÜHLMAN, P.** Estimating high-dimensional directed acyclic graphs with the pc-algorithm. *Journal of Machine Learning Research*, 2007, vol. 8 (3)